(19) Europäisches Patentamt
European Patent Office
Office européen des brevets

(11) **EP 2 512 018 A1**

(12) **EUROPEAN PATENT APPLICATION**

(43) Date of publication:
**17.10.2012 Bulletin 2012/42**

(51) Int Cl.:
***H02K 53/00*** *(2006.01)*

(21) Application number: **11462006.5**

(22) Date of filing: **15.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Pinter, Csaba**
  **6237 Kecel (HU)**
- **Fekete, Gábor**
  **3530 Miskolc (HU)**

(72) Inventors:
- **Pinter, Csaba**
  **6237 Kecel (HU)**
- **Fekete, Gábor**
  **3530 Miskolc (HU)**

(74) Representative: **Szabo, Zsolt**
**Danubia**
**Patent & Law Office LLC**
**Bajcsy-Zsilinszky út 16**
**1051 Budapest (HU)**

(54) **Method and apparatus for exploiting interaction energy of magnetic fields**

(57) The invention relates to a method and an apparatus for utilizing energy of the interaction of magnetic fields, in particular to convert said energy into mechanical and/or elecrical power. The burden of the invention lies within the fact that due to the interaction of magnetic fields, a circumferential system of forces develops that ensures a continuous synchronous connection of the magnetic fields via regulating the field to energy minimum when replacing direct mechanical couplings with magnetic transmission(s) and thus eliminating customary mechanical constraints.

Figure 1

**Description**

The present invention relates to a method and an apparatus for utilizing energy of the interaction of magnetic fields, from now on the interaction energy of magnetic fields, particularly for converting said energy into mechanical and/or electrical energy. Specifically, the present invention relates to a primary conversion of energy in the form of work of systems of forces developing when preferably strong interacting magnetic fields interact with one another, and optionally to a method and an apparatus for the conversion of mechanical energy into electrical power of high frequency via the interaction of interacting magnetic fields. The elecrical power generated by the method and apparatus according to the invention can be fed directly into a main supply grid, preferentially into an 50 Hz power-supply system.

Nowadays, due to the rapid decrease in available resources of traditional energy sources, the study and development of novel, alternative and environment friendly energy sources, as well as of energy conversion have been brought to the center of interest. In this respect high attention is devoted to such solutions wherein the energy conversion is based on the utilization of the so-called connection energy that results from the interaction between magnetic fields generated by strong magnets arranged in magnetic power machines. Numerous types of power machines are known from literature and in practice. A common feature of these machines is that the connection energy E acts in producing the driving torque exerted by them. A definition for the connection energy field vector **E**, defined as a complex quantity and characteristic of the interaction itself, as well as the connection energy and connection energy control diagrams of an induction machine are disclosed in Hungarian Patent No. 218,339B in detail which is considered to form part of the teaching of the present application and hence are not discussed here in more detail.

The patent document concerned discloses a method for controlling the speed and torque of variable frequency drives through energy control, wherein an extremely rapid and dynamical control can be realized for four-quadrant (i.e. with a motor and a generator mode in both rotation directions) variable frequency induction motor drives with the connection energy error signal. A drawback of this solution is that during control, the component of the complex connection energy that lies along the torque direction performs work merely on the motor shaft. According to a further drawback, energy rectification - that is, a process wherein the power, that does work, averaged over a full period would differ from zero for the apparatus - can be achieved only with the appearance of an induced voltage. Thus, a yet further drawback of the solution is that during operation a voltage is induced which involves the appearance of an input power as well besides the appearance of an output power.

As it is apparent in light of a scientific paper entitled "A New Energy Controlled Current Source Inverter Fed Induction Motor Drive" by Gábor Fekete, which was published in the Conference Proceedings of the 9th International Conference and Exhibition on Power Electronics and Motion Control (EPE-PEMC 2000, Kosice, Slovak Republic; see Proceedings 2000, Vol. 7., pp. 130 to 134), the connection energy E, defined as a complex quantity, can be used as a natural descriptive tool for the processes of Nature. The construction of an induction machine and its operation can be dealt with in detail and in a convenient manner if connection energy E is made use of. The scientific publication at issue points out that the connection energy component due to the interaction of magnetic fields characterized by a main flux and a rotor current performs no work on the motor shaft; it simply presses the winding of the rotor against the wall of the slot. Furthermore, a torque working on the motor shaft is provided by the connection energy component due to the interaction of directional magnetic fields characterized by the main flux and the stator current. A drawback of this solution is that the magnitude of the induced voltage changes proportionally to the rotational speed within the stator windings, and thus for the same torque at a constant stator current larger amounts of power should be fed into the stator at larger rotational speeds. An advantage of this solution, however, is that no induced voltage develops at all when mechanical energy is generated and both components of the connection energy perform work.

U.S. Patent No 4,897,592 teaches a power production by means of an electrostatic field. Electric charges are moving in an electrostatic field that is screened periodically. The thus forming connection energy is axial and hence if losses are neglected, there is no need for a circumferential force to be exerted when the screening plate is rotating. A drawback of the technique is that it can be applied merely for electrostatic fields with low energy densities.

EP-0,168,712 A1 discloses a motor equipped with a rotating permanent magnet. A drawback of this solution is that it specifies no connection wavelength. Moreover, it provides neither primary nor so-called secondary energy rectification which would be required when e.g. a multicascade energy rectification is to be realized.

Hungarian Patent No. 226,570 B1 teaches a method for the directional displacement of a rolling member located in a magnetic field without the generation of induced voltage. Here, again the energy due to the interaction of magnetic fields, i.e. the connection energy E is converted into mechanical energy through the displacement of said rolling member along a straight line. An advantage of the solution according to the cited patent document is that the setup disclosed is free of mechanical contacts and thus the continuous energy rectification is accomplished without losses. A drawback of the solution according to the cited patent document is that during the mechanical energy rectification of the full wave energy significant losses arise, and that it applies a secondary energy rectification done mechanically or by means of coils.

In light of the above, the aim of the present invention is to provide a method and an apparatus that - unlike traditionally constructed rotational machines - in the process of torque generation for doing work assures that no induced voltage develops and by eliminating direct mechanical contacts it performs a continuous energy rectification with no losses, as well as produces mechanical energy.

Here, and from now on, the term "energy rectification" refers to a process in which, for an apparatus according to the present invention, the mean energy performing work over a period, i.e. a single revolution of the rotor, differs from zero. In the inventive solution this is achieved by providing the rotating elements of the apparatus in the form of supporting members (magnet wheels or magnet rims) coupled magnetically with one another instead of elements (cogwheels) being in rigid mechanical engagement with each other. Said members can rotate essentially freely relative to each other, therefore they form a system of infinite degrees of freedom. If the degrees of freedom of the thus obtained system is to be decreased via fixing said coupled supporting members (relative to each other), that is, the possibility of a constraint-free rotation of the members relative to one another is eliminated, the energies facilitating (+) or hindering (-) their motion become zero on average over a period, and hence no energy rectification takes place. If, however, the system is maintained in its state of infinite degrees of freedom, the energy provided by a synchronous position component $E_0$ of the connection energy, said component facilitating (+) the actual motion, aims at achieving a synchronous position in every instant via the work of a circumferential couple of forces when in motion, that is, it ensures a synchronous motion of the supporting members coupled magnetically with each other. Thus, the energy rectification is accomplished with full cancelling of the energy hindering (-) the motion and without requiring further external forces, merely by means of said circumferential couple of forces.

Here, and from now on, the term "multipolar" refers to a system of permanent magnet elements arranged beside one another with alternating opposite pole axis orientations (when e.g. looking from above in the order of ...-North-South-North-South-...) and fixed in a suitable manner. Furthermore, the term (magnetic) "pole pair" refers to a pair of two permanent magnet elements arranged side by side with opposite pole axis orientation.

A further object of the invention is to provide a method and an apparatus for utilizing the interaction energy of magnetic fields, wherein the retroaction of a load enables the omissibility of external inputs to cover additional losses, electrical power generation in small volumes and at high frequencies and through magnetic transmissions that are free from mechanical wearing, as well as the possibility for a simple way of feeding the electrical power generated into traditional power networks.

In light of the above, the aimed objects are achieved by providing an apparatus according to Claim 1. Preferred embodiments of the apparatus are those that are set forth in Claims 2 to 12. Moreover, the aimed objects are achieved by the provision of a method for converting energy in accordance with Claim 13. Preferred variants of the method are defined by Claims 14 and 15. A magnetic transmission to be used in said apparatus and said method to eliminate the wearing of moving parts is defined by Claim 16.

In particular, the apparatus according to the present invention for primary energy conversion accomplished through the work of systems of forces due to the interaction of magnetic fields comprises a stator member, at least one permanent magnet pole pair and at least two, first and second pairs of rims formed with outer and inner magnet carrying cylindrical bearing surfaces, wherein permanent magnet pole pairs (i.e. pairs of permanent magnet elements arranged side-by-side continuously with an opposite pole axis orientation in terms of magnetic polarity) are attached firmly onto every outer and inner magnet carrying bearing surface of the respective rims of the pairs of rims with a pole axis orientation perpendicular to the respective bearing surface. The geometrical axes of said first and second pairs of rims are substantially parallel to each other. The pole pairs arranged on the same magnet carrying bearing surface form an outer and an inner magnet rim on said bearing surface, wherein to utilize the interaction energy of the magnetic fields of the magnet rims, said magnet rims are coupled to each other: the outer magnet rim of the first pair of rims, i.e. the first ring magnet rim, is attached firmly to the stator member; the inner magnet rims of the first and second pairs of rims, i.e. the epicyclic magnet rims, are joined together mechanically into an epicyclic member that has an arm and forms a single unit capable of performing planetary motion; the outer magnet rim of the second pair of rims, i.e. the second ring magnet rim, is arranged so as to be capable of performing free rotations around an axis; here, when the arm of said epicyclic member swivels, the outer magnet rim of the second pair of rims, i.e. said second ring magnet rim, can also rotate under the constraint of air gap variation. To perform said work, the rotating rotor member is mechanically loaded, the rotating rotor member transmits said load to the first ring magnet rim, however, when in motion, due to the retroaction of the load torque, preferably the arm itself can rotate around its axis as well. The extent of rotation of the arm can be uniquely set through the construction parameters.

Furthermore, the apparatus according to the present invention is equipped with multipolar ring magnet rims and coil yokes to convert mechanical energy into elecrical power exploiting the interaction of magnetic fields interacting with one another, a rectifying unit known *per se* from power electronics and/or a demodulating unit known *per se* from telecommunications, wherein, preferably per poles, at least one first conducting element with first and second ends made of an electric conductor is arranged in a fixed position between the rotating ring magnet rims, within the interacting magnetic fields thereof, which magnet rims are arranged so that their inner and outer bearing surfaces radially face to each other. Said first conducting elements are connected electrically in series in pairs through their first and second ends in turn by means of second conducting elements, forming thereby a continuous winding over each of the outer and inner surfaces of the coil yokes. Said first and second conducting elements made of electric conductors are preferably provided by straight and arcuate, respectively, rods quadrilaterial in cross-section.

Preferably, in a first load embodiment of the apparatus according to the invention, an external electric load is applied on the coil yokes directly or via the inserted rectifying unit through suitably connected electric connections.

Preferably, in a second load embodiment of the apparatus according to the invention, the number of first conducting elements of the coil yoke is chosen so as to obtain a coil yoke voltage sum between the electric connections applied to said coil yoke fluctuating at 100 Hz. In this preferred load embodiment, an electric voltage, preferably of 50 Hz, apt for being fed directly into the main supply grid can be generated by the demodulating unit connected to said electrical connections. As it is apparent to a person skilled in the art, an electric voltage apt for being fed directly into a main supply grid with any other desired operational frequency (e.g. of 60 Hz) can be equally generated if the number of said first conducting elements of said coil yoke is suitably choosen in case of the second load embodiment of the apparatus according to the invention.

Framing of the present invention was enabled by the findings that a system of forces developing due to the connection energy describing the interaction of magnetic fields ensures a continuous synchronous connection of said magnetic fields via regulating the field to energy minimum when replacing direct mechanical couplings with magnetic transmission(s). An advantageous effect (that is, when a retroaction due to a given action does not retroact directly on the source of said action) can be achieved by combining said systems, as a consequence of which the retroaction of a load on the rotating input (i.e. on the arm of the epicyclic member of the apparatus) exciting the motion and defining a position of minimal air gap can be set through the geometrical parameters of the system. The extent of the retroaction can be expressed by a retroaction coefficient $\delta$ characterizing the system. For the retroaction coefficient, either $\delta \geq 0$ or $\delta \leq 0$ holds. The motion of the rotating input is promoted or impeded by its positive or negative, respectively, value.

In what follows, the invention is discussed in detail with reference to the attached drawings, in particular in relation to a preferred embodiment of the apparatus according to the invention provided in the form of a novel electrical rotation machine that has a symmetric construction. Furthermore, the attached drawings also illustrate the guiding concept behind the apparatus and the method according to the invention, some additional preferred embodiments of the apparatus, as well as the magnetic transmission involved within said apparatus. The attached drawings, nevertheless, should not be construed as limiting or otherwise restricting the present inventive solution. In the drawings:

- Figure 1 shows schematically and in sectional view an apparatus, from now on a wave generator, for utilizing the interaction energy of magnetic fields according to the invention;
- Figure 2 illustrates the path of motion of the connection energy field vector **E** describing the interaction of magnetic fields as a function of the relative movement of the magnetic rims exciting said magnetic fields;
- Figure 3 shows the system of forces developing as a result of the connection energy for $\alpha_v = 0°$ and at the angular positions denoted by 0' in Figure 2;
- Figure 4 shows the system of forces developing as a result of the connection energy for $\alpha_v = 90°$ and at the angular positions denoted by 1' in Figure 2;
- Figure 5 shows the system of forces developing as a result of the connection energy for $\alpha_v = 30°$ and at the angular positions denoted by x in Figure 2;
- Figures 6 to 12 illustrate, for the sake of better understanding, the inventive concept, the manner of how to derive the wave generator shown in Figure 1 for converting the interaction energy of magnetic fields into elecrical power from a traditional geared epicyclic train, wherein

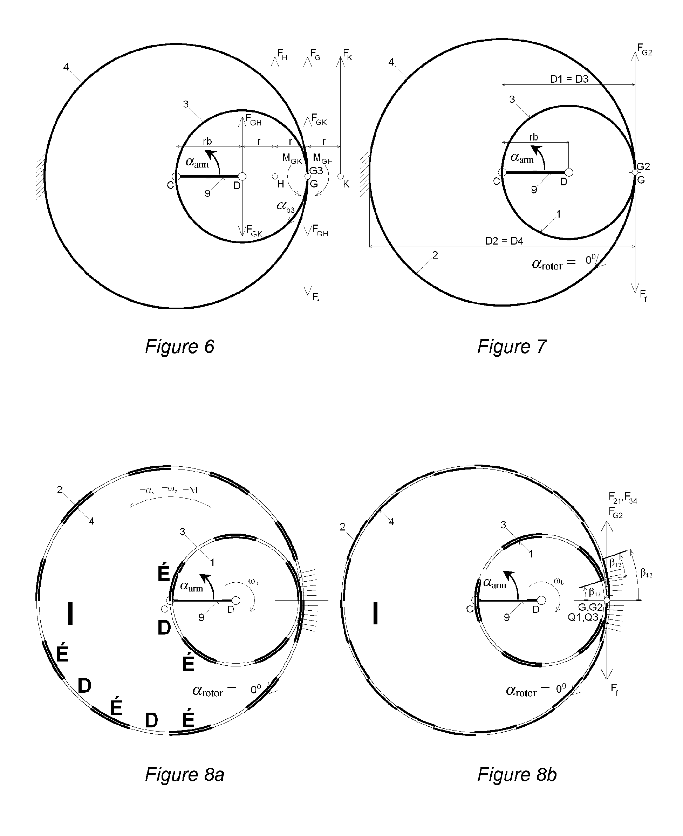

- Figure 6 illustrates an epicyclic train with a gear ratio of 2;
- Figure 7 illustrates an epicyclic drive obtained by combining epicyclic trains with a gear ratio of 2 shown in Figure 6;
- Figures 8a to 8g show type I design of the apparatus according to the invention constructed with "magnetic toothing" (first embodiment);

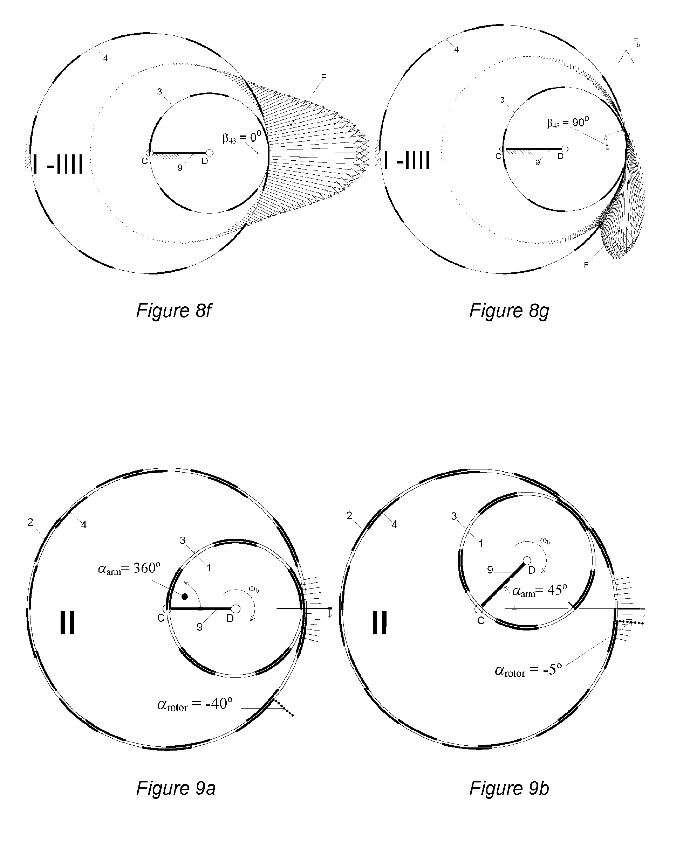

- Figures 9a to 9f show type II design of the apparatus according to the invention constructed with "magnetic toothing" (second embodiment);

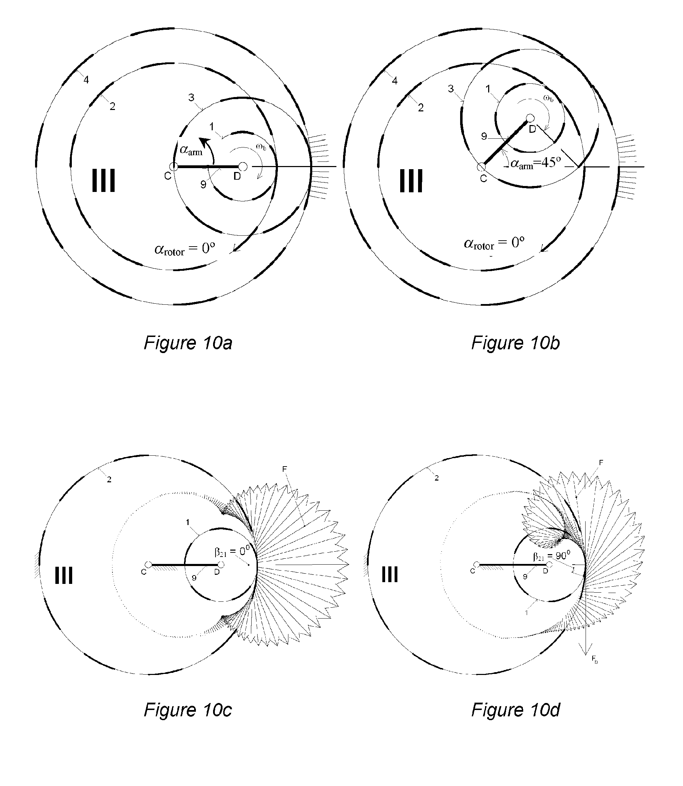

- Figures 10a to 10d show type III design of the apparatus according to the invention constructed with "magnetic toothing" (third embodiment);

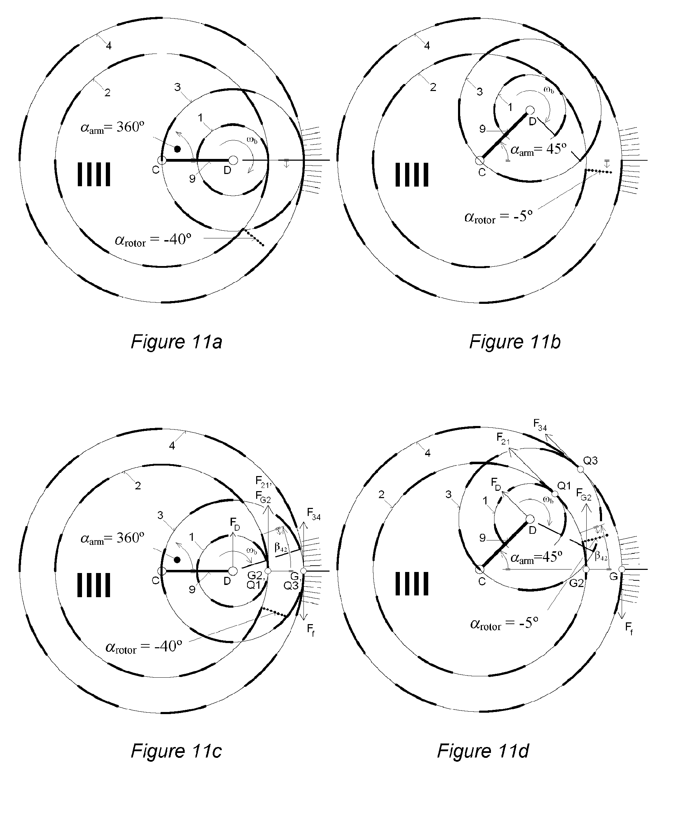

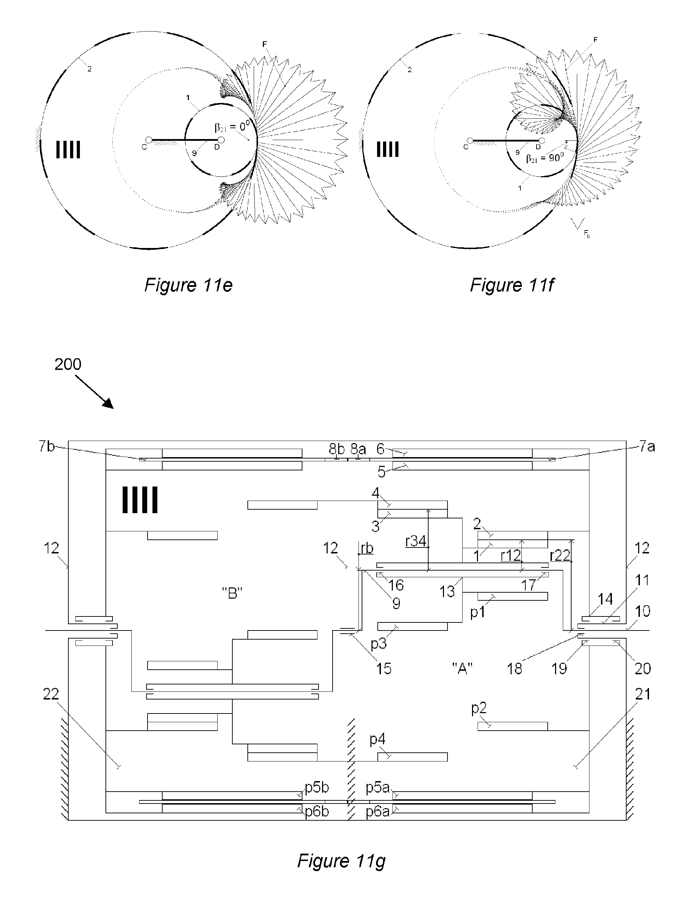

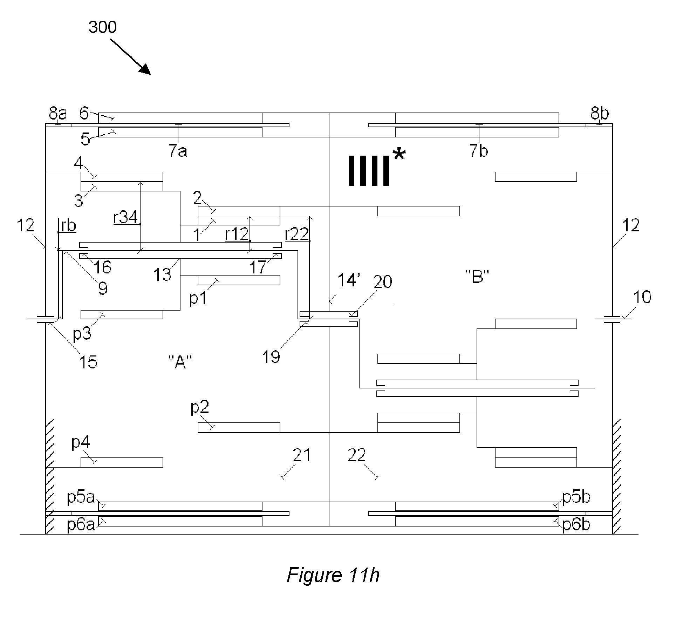

- Figures 11 a to 11 g show type IIII design of the apparatus according to the invention constructed with "magnetic toothing" (fourth embodiment);
- Figure 11h illustrates a possible further preferred embodiment of the type III design of the apparatus according to the invention;

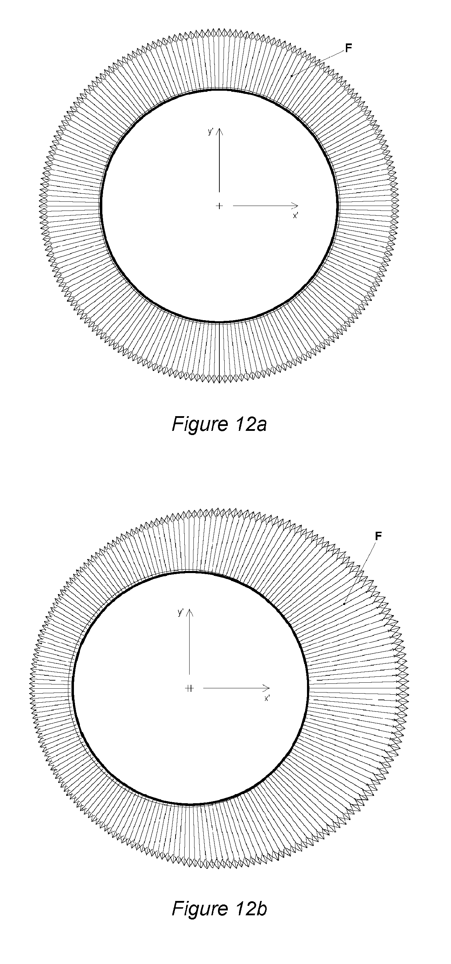

- Figures 12a and 12b show the system of forces acting on a unit area of the magnetic bearings applicable in the apparatus according to the invention;

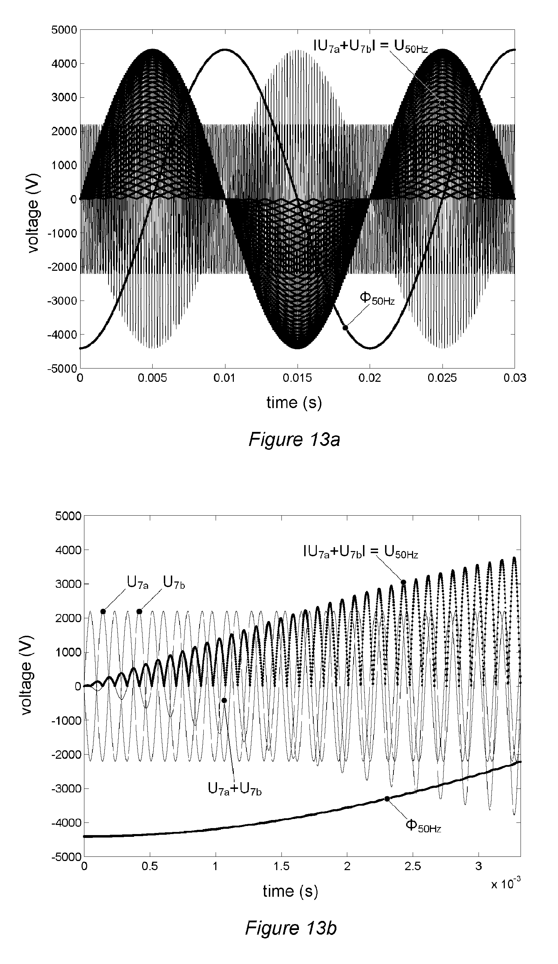

- Figures 13a and 13b illustrate the time evolution of the voltages obtained within the coils and the flux corresponding to 50 Hz;

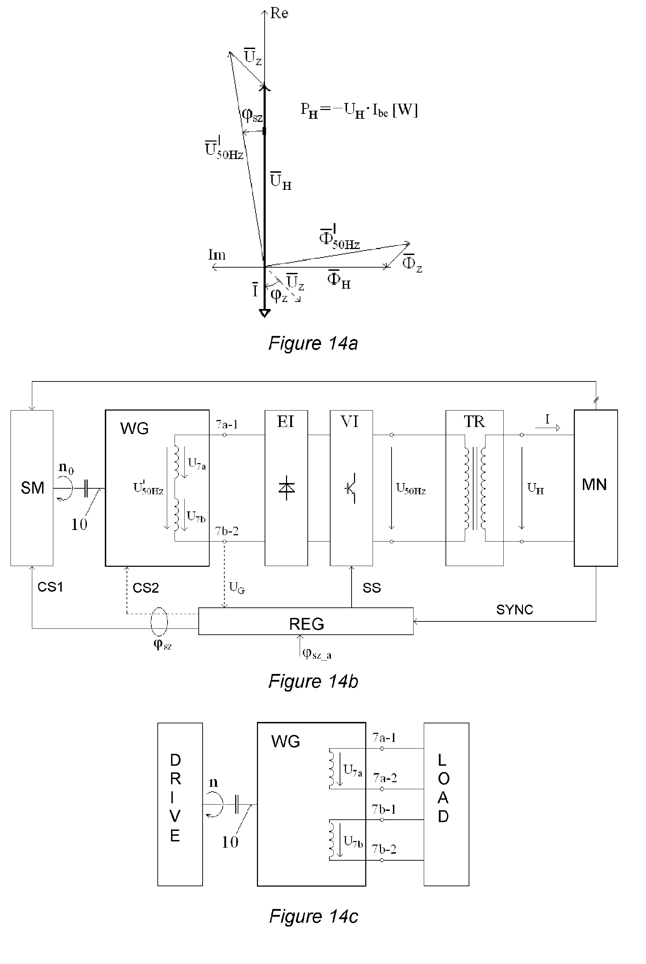

- Figure 14a shows the characterizing voltages, fluxes and the current I fed into the mains in a traditional phasor diagram;
- Figure 14b is a flowchart showing the conversion of mechanical energy into electrical power according to the present invention and feeding of the latter into e.g. an 50 Hz main supply grid;
- Figure 14c outlines a further direct way of consumption of the elecrical power generated by the inventive solution;

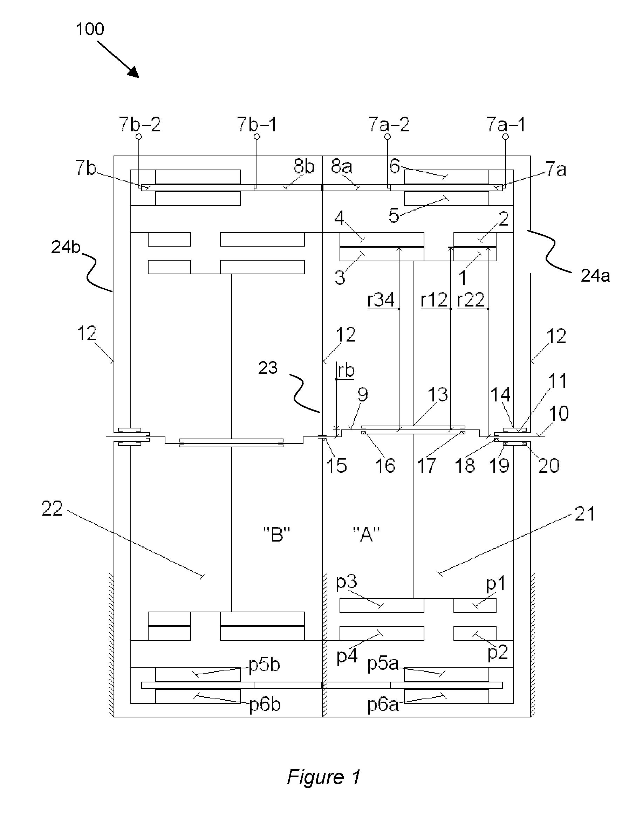

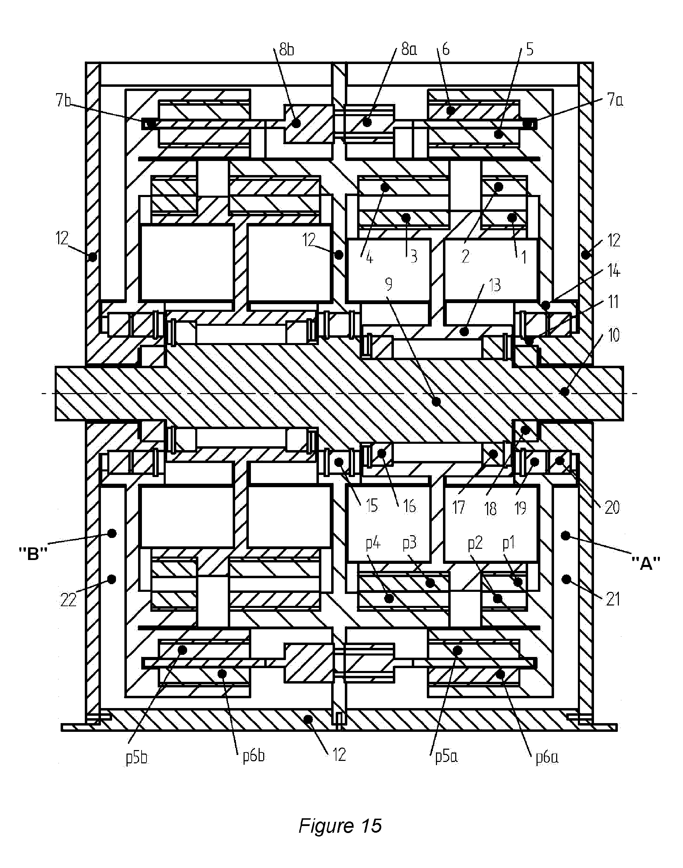

- Figure 15 shows in sectional view a possible further embodiment of the apparatus according to the invention illustrated in Figure 1;

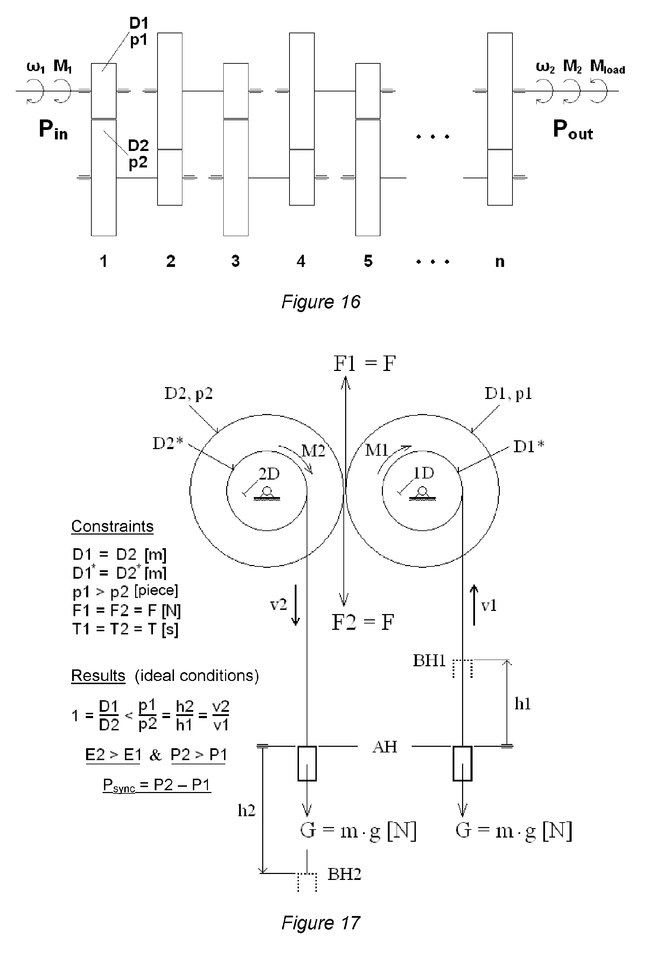

- Figure 16 illustrates a magnet wheel drive; and
- Figure 17 schematically shows an experimental arrangement to prove the existence of power $P_{sz}$ arising due to the synchronous motion of the magnetic field.

As it is known (e.g. from the theory of electrical rotating machines) by a person skilled in the art, if a rotor characterized by a complex current I is arranged within a field characterized by a complex flux Φ, the arising effect can be described by the connection energy E that can be characterized by the complex connection energy field vector **E** (here, and from now on, bold letters always stand for vector quantities). This way of description is also suitable for explaining the operation of the novel electrical rotating machine, or wave generator, according to the present invention. As it is known from the literature, the connection energy E is defined by the relation

$$E = |\mathbf{E}| = |(\mathbf{\Phi} \cdot \mathbf{I}^*)^* \cdot (-j)| = |M - j \cdot E_0|,$$

wherein
**E** is the complex connection energy, from now on referred to as the connection energy field vector **E**,
Φ is the complex flux,
**I** is the complex current,
* denotes the operation of conjugation,
j stands for the customary imaginary unit,
$E_0$ represents the magnetic energy, and
M represents the active energy (or the potential energy representing the work).

The apparatus, or wave generator, 100 illustrated in Figure 1 is of symmetrical construction, and hence represents an embodiment which minimizes the systems of forces that are disadvantageous from operational point of view. The apparatus 100 is a novel electrical rotating machine that comprises preferably a cuboid shaped enclosure, a first portion "A" 21 and a second portion "B" 22 with identical constructions and dimensions arranged within the enclosure, as well as a stator member 12 and a common shaft 10. In the embodiment illustrated in Figure 1, the first portion "A" 21 and the second portion "B" 22 are combined into a single unit through the stator member 12 by means of a partition 23. The common shaft 10 is supported rotatably in bearings arranged in the stator member 12. One of the bearings that support said shaft 10 is provided by bearing 15 embedded in the partition 23, while the other bearing of the shaft 10 is provided by a respective bearing 18 arranged within a respective hollow shaft 11 formed as an integral portion of a respective wall 24a or 24b, wherein the walls 24a and 24b face to the partition 23. Said walls 24a and 24b may also form part of the stator member 12 itself. Since portion "A" 21 and portion "B" 22 are identical with respect to construction (and operation), in what follows, the construction of the apparatus 100 will be discussed with reference to only one of the portions concerned (if this is not the case, it will be clearly noted). Moreover, it should be here also noted that if the apparatus 100 is formed with merely one of the first portion "A" 21 and the second portion "B" 22 (that is, its construction is not symmetrical), the partition 23 receiving the bearing 15 is replaced accordingly by one of the walls 24a and 24b having the hollow shaft 11.

The apparatus 100 also comprises epicyclic magnet rims 1 and 3 with different pole pair numbers, ring magnet rims 2, 4, an arm 9, an epicyclic member 13, a rotor member 14, arm bearings 16 and 17, hollow shaft bearings 19 and 20, and optionally preferably further ring magnet rims 5 and 6, a coil yoke 7a (within portion "A"), a coil yoke 7b (within portion "B"), a coil holder 8a (within portion "A"), a coil holder 8b (within portion "B"). As it can be seen in Figure 1, the mechanical chains close through (attractive/repulsive) magnetic connections established by magnetic fields, and hence there are no mechanical contacts (that are present customarily between the cogwheel teeth). The pole pairs of the magnetic connections are formed by pairs p1, p2, p3, p4, p5a, p6a, p5b, p6b of permanent magnet elements arranged beside one another with opposite pole axis orientation on the magnet rims 1, 2, 3, 4, 5, 6, respectively, serving as supporting members or on their supporting surfaces. Each of said permanent magnet elements is of elongated rod shape, and their pole axes are substantially perpendicular to the supporting surfaces of the respective supporting members that carry said permanent magnet elements.

A synchronous motion of the apparatus is ensured by the magnetic filed via performing regulation to energy minimum in an arrangement wherein, for primary energy conversion, the pole pairs made of permanent magnets are firmly affixed (by e.g. bonding or any other joining techniques) on to the magnet carrying cylindrical surfaces. The pole pairs are arranged on said cylindrical surfaces preferably in parallel with the geometrical axes of said surfaces, i.e. longitudinally, and in close proximity (i.e. substantially with no gaps between them) to each other along one another. Said pole pairs thus form preferably magnetic rims of multiple pole pairs with inner and outer surfaces. To utilize the interacting magnetic fields of the magnetic rims, they are coupled magnetically which is free of mechanical contacts, i.e. forms through air gaps. To this end, at least two pairs of rims, i.e. a first and a second pairs of rims, are made use of, which extend along the shaft 10 with no overlap to each other. Furthermore, the individual magnet rims of said pairs of rims are located radially (that is, in a direction which is substantially perpendicular to the shaft 10) closer and farther from the shaft 10. In particular, the first pair of rims is built up of the first epicyclic magnet rim 3 and the respective associated first ring magnet rim 4, while the second pair of rims is built up of the second epicyclic magnet rim 1 and the respective associated second ring magnet rim 2. The magnetic coupling of said pairs of rims is established in the following way: the magnet rim of the first pair of rims located radially farther (from now on, the outer magnet rim), i.e. in this case the ring magnet rim 4, is firmly attached mechanically to the stator member 12 of the apparatus 100, while the magnet rims of the first and second pairs of rims located radially closer (from now on, the inner magnet rims), i.e. here the epicyclic magnet rim 1 and the epicyclic magnet rim 3, are firmly attached, in the form of a single mechanical unit, to the epicyclic member 13 performing planetary motion within the apparatus 100. Moreover, the magnet rim of the second pair of rims located radially farther from said geometrical axis (from now on, the outer magnet rim), i.e. in this case the ring magnet rim 2, is attached to the rotor member 14 of the apparatus 100 and hence it can freely rotate. Having fixed the pairs of rims as discussed above, geometrical axes of the ring magnet rims 2, 4 coincide practically with the geometrical axis of the shaft 10, while geometrical axes of the epicyclic magnet rims 1, 3 coincide with the axis of rotation of the epicyclic member 13 that is arranged so as to rotate in the arm bearings 16, 17 around the shaft 10 and to occupy an off-centered position relative to said shaft 10 in the embodiment illustrated in Figure 1. That is, the epicyclic member 13 is journaled in the arm 9 mechanically. Said ring magnet rim 2 affixed to the rotor member 14 can thus swivel around the shaft 10 under the constraint of air gap variation when said arm 9 of the epicyclic member 13 swivels/rotates. In this construction, due to the eccentric layout, the outer and the inner magnet rims of said first and second pairs of rims face to one another and are arranged in a contact-free way with maintaining air gaps therebetween. When the apparatus 100 is fully assembled, each air gap takes a minimum when going around the circumference of a respective rim. Consequently, the inner and the outer magnet rims have got no mechanical contacts, and during their swivel/rotation they maintain tiny air gap minima therebetween.

Said ring magnet rims 5 and 6 forming a third pair of rims, said coil yokes 7a, 7b and said coil holders 8a, 8b, all used optionally in the apparatus 100, are installed into the apparatus 100 around the shaft 10 so as to extend longitudinally along it in a position that locates radially farther from the geometrical axis of the shaft 10 than said first and second pairs of rims. Said ring magnet rims 5 and 6 are affixed to the rotor member 14 concentrically with and apart from one another. Said coil yoke 7a is attached to the stator member 12 by means of the coil holder 8a so that it occupies a position just in the region between said ring magnet rims 5 and 6 and maintains tiny air gaps with said magnet rims on both sides thereof when it is installed into the apparatus 100. Furthermore, when the coil yoke 7a is used, in its position occupied after the installation, it does not hinder physically the rotation of said ring magnet rims 5, 6 and thus the rotation of the rotor member 14. Said coil yoke 7b is arranged similarly to the coil yoke 7a, the only difference is that it is placed into between the respective elements in the portion "B" 22.

The rims providing magnet carrying bearing surfaces for the permanent magnet pole pairs p1, p2 p3, p4, p5a, p6a, p5b, p6b forming said magnet rims 1, 2, 3, 4, 5, 6 are preferably made of polimer materials, e.g. cross-linked polimer and plastic composites with high tensile strength and good insulation and thermal properties. Optionally, a thin soft iron ring adjacent to the magnet elements is also arranged on the surfaces of the plastic rims, which facilitates the side-by-side affixing of said magnet elements with alternately opposite pole axis orientations.

Preferably, the permanent magnet elements of said magnet rims are provided by industrial magnets exciting high magnetic fields, preferentially in the form of thin rectangular shaped plates. Neodymium magnets having extremely high magnetic fields and relatively high maximum heat tolerance point (working temperature) are especially preferred in this regard. Nevertheless, other types of magnets can equally be used. It is noted that - as it is apparent to a person skilled in the art - when the apparatus 100 is under operation, said magnet rims 1, 2, 3, 4, 5, 6 have to be subjected to properly designed cooling in order to avoid that due to the temperature increase within the inner space of the apparatus 100 induced by the eddy currents developing in the bulk portions of the permanent magnet elements affixed on said magnet rims, as well as the air friction and other friction losses, the temperature of the permanent magnet elements applied exceeds permanently their working point and/or their Curie temperature resulting in full demagnetization. Furthermore, as it is also apparent to a person skilled in the art, the windings of the coil yokes 7a, 7b also require cooling if the output power of the apparatus 100 is increased. Accordingly, the enclosure of the apparatus 100 and/or the stator member 12 is provided with appropriate cooling openings (not shown in the drawings), allowing at least air cooling, formed e.g. in the walls 24a and 24b, and optionally also in the partition 23. Having knowledge of the parameters of said apparatus 100, calculating the cooling demand set by the apparatus 100 is obvious to a skilled person.

According to the above discussed facts and exploiting the analogy of geared epicyclic motion to be discussed later in detail, for the rotation angle $\alpha_{rotor}$ of the rotor member 14 the relation

$$\alpha_{rotor} = \alpha_{arm} \cdot \left(1 - \frac{p1 \cdot p4}{p2 \cdot p3}\right)$$

holds, wherein $\alpha_{arm}$ represents the rotation angle of the arm 9 about the shaft 10, $p1$ is the pole pair number of the magnet rim 1, $p2$ is the pole pair number of the magnet rim 2, $p3$ is the pole pair number of the magnet rim 3 and $p4$ is the pole pair number of the magnet rim 4 (here, based on the cogwheel analogy and starting with the corresponding cogwheels having a number of teeth $zi$, the pole pair numbers $pi$ are defined by $pi$=zi/2, wherein i=1, ... , 4).

If the swiveling rotor member 14 is mechanically loaded from the outside in order to perform work, in the (so-called basic) embodiment of the apparatus 100 illustrated in Figure 1, the rotor member 14 swiveling about the shaft 10 transmits the force acting thereon onto the ring magnet rim 4 attached to the stator member 12. In further preferred embodiments of the apparatus 100, when in motion, the load torque retroacts on the arm 9, in certain cases it can also allow rotation of the arm 9 in the arm bearings 16 and 17. The retroaction of the load on said arm 9 is described by the retroaction coefficient $\delta$ that is determined uniquely by the geometrical layout and can be written in the form of

$$\delta = \frac{rb}{r22} \cdot \left(1 - \frac{r12}{r34}\right)$$

and

$$M_{arm} = \delta \cdot M_{load}$$

on the basis of the analogy of geared epcyclic trains, wherein (as it can also be seen in Figure 1) rb stands for the epicyclic radius (that is, the distance measured between the geometrical axis of the shaft 10 and the axis of rotation of the epicyclic member 13 on the arm 9; or putting it another way, in this case the amount of eccentricity of the shaft 10), r12 represents the distance measured at the air gap minimum between the surfaces of the magnet rims 1 and 2 facing to each other and the axis of rotation of the epicyclic member 13, r22 represents the distance measured at the air gap minimum between the surfaces of the magnet rims 1 and 2 facing to each other and the geometrical axis of the shaft 10, r34 represents the distance measured at the air gap minimum between the surfaces of the magnet rims 3 and 4 facing to each other and the axis of rotation of the epicyclic member 13, and $M_{load}$ stands for the load torque, while $M_{arm}$ is the torque that retroacts on the arm 9. It should be here noted that a system - $\delta$ and output power - which is advantageous cannot be obtained by a traditional geared epicyclic train, as a rolling gear connection that satisfies mechanical constraints (and thus does not form a system of infinite degrees of freedom) is not able to bring about the geometrical slip required by the magnetic synchronous connection of the present invention.

A primary energy conversion is performed by means of the apparatus 100 according to the invention in such a way that the energy of the interaction of the magnetic fields excited by the permanent magnet elements that are arranged continuously on the first and second pairs of rims is transformed into work done by the system of forces (a circumferential couple of forces) arising due to the interaction. For this, the presence of the third pair of rims and the coil yoke(s) is dispensable.

A secondary energy conversion is performed by means of the apparatus 100 according to the invention in such a way that first conducting elements, preferably one per poles, provided in the form straight rods quadrilaterial in cross-section with first and second ends and made of an electric conductor are placed between the ring magnet rims 5 and 6, in their magnetic fields, of the rotor member 14, wherein said ring magnet rims 5 and 6 face to and are apart from one another. Said first conducting elements extend in parallel with each other. Furthermore, said first conducting elements are connected to each other through their opposite ends via second conducting elements (not illustrated in the drawings) provided in the form of arcuate rods in such a way that the first end of a certain first conducting element is coupled galvanically with the first end of an adjacent first conducting element, while the second end of the given first conducting element is coupled galvanically with the second end of the other adjacent first conducting element. As a result of this connection procedure, a meandering unit of the first and second conducting elements connected in series forms in order that the voltages that will be induced within the individual conducting elements add up. From the obtained meandering unit, the coil yoke 7a and 7b windings are formed separately in both the first portion "A" 21 and the second portion "B" 22. Here, the ring magnet rim 5 comprises $p5a$ and $p5b$ pieces of pole pairs in the first portion "A" 21 and in the second portion "B" 22, respectively. Furthermore, the ring magnet rim 6 comprises $p6a$ ($p6a=p5a$) and $p6b$ ($p6b=p5b$) pieces of pole pairs in the first portion "A" 21 and in the second portion "B" 22, respectively. The coil yokes 7a and 7b of the apparatus 100 are affixed to the stator member 12 via the coil holders 8a and 8b, respectively.

In a first load embodiment of the apparatus 100, said windings of the coil yokes 7a and 7b are loaded electrically through their connections 7a-1, 7a-2 and 7b-1, 7b-2, respectively, directly or after performing rectification. In a second load embodiment of the apparatus 100, the numbers of the first conducting elements in said windings of the coil yokes 7a and 7b are chosen so that the sum of the voltages forming between the connections 7a-1, 7a-2 and 7b-1, 7b-2 of the two high-frequency windings fluctuates preferably at 100 Hz. Hence, by performing a demodulation of this voltage, an 50 Hz electrical power can be utilized or fed directly into the main supply grid (as it will be discussed in detail in connection with Figures 13 and 14).

As it was mentioned earlier, in a preferred variant of the method according to the present invention, the energy of the interaction of magnetic fields excited by the permanent magnet elements used within the apparatus 100 is converted primarily into the work of the system of forces induced by the interaction without physical contacts between said permanent magnet elements, via performing regulation to energy minimum obtained by energy rectification and also ensuring synchronous motion of the air gap minimum (Lenz's law). As far as the apparatus according to the invention is concerned, due to lack of mechanical forced couplings, i.e. replacing mechanical constraints with magnet elements exerting attraction to one another, a system of infinite degrees of freedom is obtained that allows a slip or a "jump" (that is, a slip exceeding a certain limit that results in establishing the air gap minimum with a farther locating, e.g. neighbouring pole pair member) of the magnet elements forming the pole pairs relative to each other. In the apparatus according to the invention, the magnetic fields between the magnet rims maintain a synchronous motion throughout the movement of said magnet rims that can be used to perform work.

In a preferred further variant of the method according to the present invention, the mechanical energy available on the rotor member 14 of the apparatus 100 (as a consequence of rotation about the shaft 10) is converted into electrical power by means of suitable high-voltage and high-frequency windings prepared as discussed before and arranged on stationary coil yokes 7a, 7b located between the ring magnet rims 5, 6 of said rotor member 14 by exploiting the principle of magnetic induction, applying optionally a rectifying unit known *per se* from power electronics and/or a demodulating unit known *per se* from telecommunications.

Possible further embodiments of the apparatus or wave generator according to the invention (see e.g. Figures 11g and 11h) will be discussed below in detail, in relation to their operation.

Despite the fact that a symmetric embodiment of the apparatus 100 (i.e. built up of symmetric portions "A" and "B") according to the invention has been detailed previously, it is apparent to a skilled person in the art that an apparatus accomplished with only one of the portions "A" and "B" or an apparatus obtained by interchanging relative positions of said portions "A" and "B" (see especially Figure 11 h) can be similarly operated in order to convert the interaction energy of magnetic fields into mechanical and/or electrical power. If the apparatus 100 is constructed with either portion "A" or portion "B" alone, preferably more than one epicyclic magnet rims 1, 3 are used that are supported in separate bearings in the arm 9 and located symmetrically, in a plane section perpendicular to the shaft 10 equidistantly around the shaft 10 (that is, when e.g. $n$ pieces of epicyclic magnet rim are applied, the magnet rims are located at an angular distance of $360°/n$ from one another). In an embodiment like this, the air gap minimum is maintained separately by each of the symmetrically arranged epicyclic magnet rims of the first and second pairs of rims with the respective ring magnet rims 2, 4 of the first and second pairs of rims, respectively. In this way, an especially stable embodiment of the apparatus 100 is achieved in terms of mechanical forces developing during operation of said embodiment.

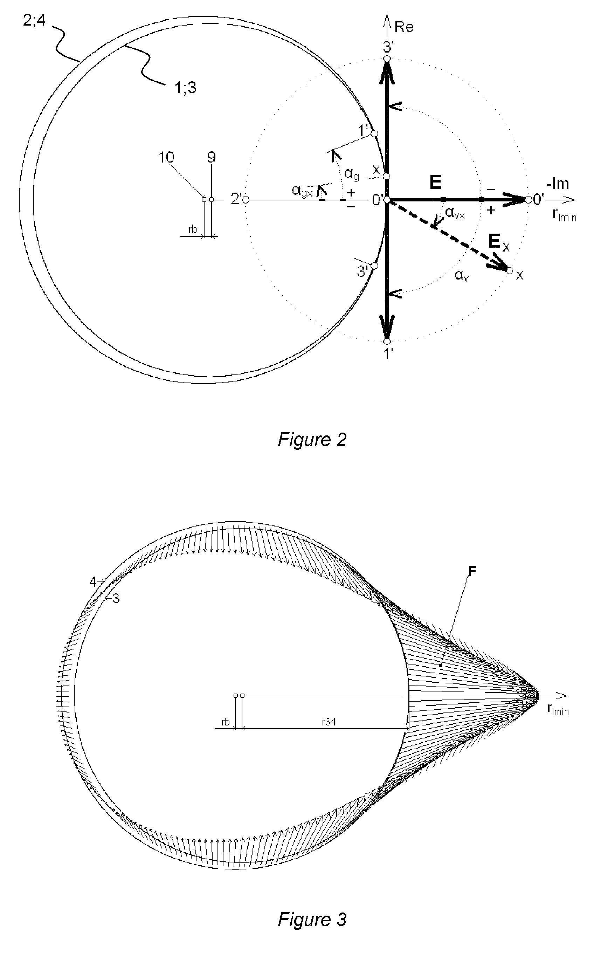

Figure 2 illustrates the path of motion of the connection energy field vector **E** describing the interaction of magnetic fields when the mechanical parts of the apparatus 100 are in motion. As it can be seen in the Figure, each a magnet rim of the two pairs of rims, that is, the epicyclic magnet rim 1 or 3 and the ring magnet rim 2 or 4, respectively, are joined together through an epicyclic train mechanism, wherein the outer and the inner magnet rims of the first and second pairs of rims comprise pole pairs in preferably chosen numbers. Depending on the additional mechanical constraints present, the position of the air gap minimum can travel round continuously when the arm 9 rotates. The position of the air gap minimum is represented by a radial polar coordinate axis associated with the minimal air gap point denoted by $r_{lmin}$. The so-called connection magnet field of interacting magnets is described by the connection energy field vector **E**. The connection magnet field always takes the least energy which is the attraction of the two opposite magnet rims at the air gap minimum if no load is applied. According to Figure 2, in such a case, position 0' realizes. The connection energy field vector **E** describes this energy coupling by a polar coordinate vector that points in the direction of the radius $r_{lmin}$. If the arm 9 is fixed, the two magnet rims (1, 2 or 3, 4) can freely rotate around the bearings 15 and 18, 16 and 17, and 19 and 20, respectively; in this case the rotor member 12, of course, is not fixed (see Figure 1). Relative angular displacements of said magnet rims are determined by their pole par numbers. If the outer ring magnet rim 2 or 4 gets fixed and the arm 9 is rotated from the outside, the air gap minimum travels round and the connection energy field vector **E** describing the magnetic energy coupling also travels round with its polar coordinate. For interpreting the connection energy field vector **E** in the plane, an *Im* imaginary axis pointing into the negative direction is put upon the polar coordinate and then the *Re* real axis perpendicular to it is also added. The projections onto the thus introduced axes show that here component $E_0$ of the connection energy field vector **E** falls into the imaginary direction (and, in the earlier studies, it fell into the same direction). This ensures energy minimum at every time and synchronous connection of the fields. If the arm 9 gets fixed and either epicyclic magnet rim 1 or 3 is rotated, the air gap minimum remains at the same point according to the Figure, i.e. it does not move. If the rotation is performed in the (+) direction of a geometrical angle $\alpha_g$, the connection energy field vector $E$ will rotate in the (+) direction of the electrical angle $\alpha_v$ in harmony with the pole pair numbers, and its end point travels along a circle. To perform a displacement from position 0' to position 2', energy has to be fed in, which will be returned by the system in its motion from position 2' into position 0'. In case of a displacement in the (-) direction, the connection energy field vector $E$ rotates in the (-) direction as well. For the apparatus shown in Figure 1 the system of forces corresponding to the connection energy field vector $E$, in particular its values taken at the typical phase angles 0', 1' and x are illustrated in Figures 3, 4 and 5, respectively.

In Figure 3 the epicyclic magnet rim 3 and the ring magnet rim 4 are brought into coupling with one another according to the construction of Figure 1. Here, the system of forces of the connection energy field vector $E$ at the (geometrical and electrical) positions 0' indicated in Figure 2 can be seen. The polar coordinate axis associated with the air gap minimum point $r_{lmin}$, the epicyclic radius rb, as well as the distance r34 which is provided practically by the distance between the ring magnet rim 4 and the geometrical axis of the arm 9 when the air gap minimum is taken, are also indicated. The relations Re { **E** } = 0 and Im { **E** } = $E_0$ hold, wherein $E_0$ is the energy that pulls the magnet rim surfaces together at position 0' that results in a force in this location.

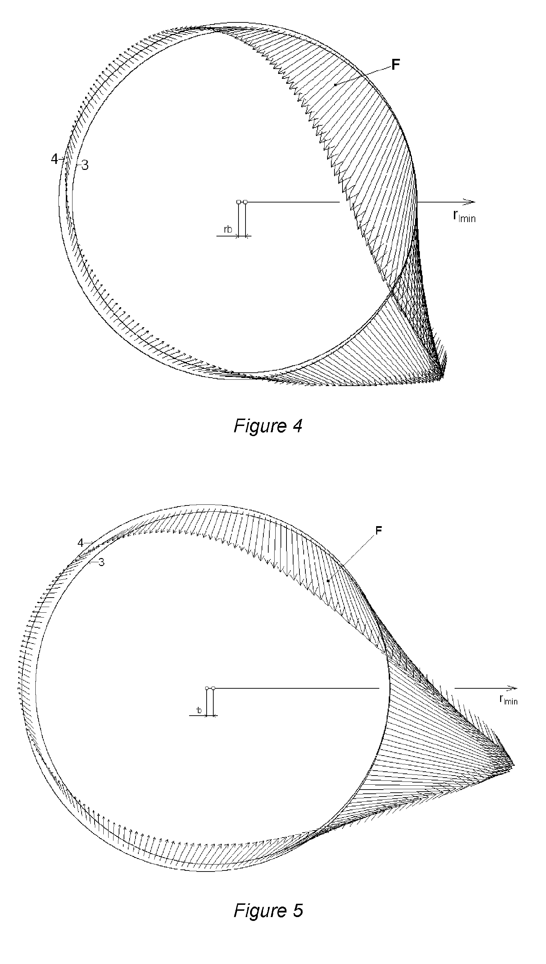

In Figure 4 the epicyclic magnet rim 3 and the ring magnet rim 4 are brought into coupling with one another according to said construction. Here, the system of forces of the connection energy field vector **E** at the (geometrical and electrical) positions 1' indicated in Figure 2 can be seen, wherein **F** represents the force per unit area. The polar coordinate axis associated with the air gap minimum point $r_{lmin}$ and the epicyclic radius rb are also indicated. The relations Re { **E** } = M and Im { **E** } = 0 hold, wherein M is the torque of the circumferential system of forces, which is practically a potential energy like quantity.

In Figure 5 the epicyclic magnet rim 3 and the ring magnet rim 4 are brought into coupling with one another according to said construction. Here, the system of forces of the connection energy field vector **E** at the (geometrical and electrical) positions x indicated in Figure 2 can be seen, wherein **F** represents the force per unit area. The polar coordinate axis associated with the air gap minimum point $rl_{min}$ and the epicyclic radius rb are indicated as well. The relations Re { $\mathbf{E_x}$ } = $M_x$ and Im { $\mathbf{E_x}$ } = $E_{0x}$ hold, wherein $M_x$ is the torque of the circumferential system of forces, which is a potential energy like quantity, and can be exploited by performing work, and $E_{0x}$ is the energy that pulls the surfaces together at position 0' which results in a force and also ensures a stable operation at this point of operation.

In what follows, for the sake of better understanding of the present invention, the manner of how to derive the apparatus 100 according to the invention from traditional geared epicyclic trains is detailed with reference to Figures 6 to 12 through the basic magnetic construction types I, II, III, IIII and IIII* of the apparatus 100. Here, the functional units of said apparatus are referred to by the notations used in Figure 1.

Figure 6 exemplifies an epicyclic train with a gear ratio of 2. Let us suppose the fixed annulus (ring) 4 and the planetary gear 3 with a toothing of module m = 10 (mm), having numbers of teeth z4 = 20 and z3 = 10 and diameters D4 = m·z4 and D3 = m·z3, respectively. It is noted that, here and in what follows, any numerical values of the geometrical parameters represent only a possible choice, said parameters can take any other values as well in harmony with geometrical relations of the apparatus to be practiced. The arm 9 and the planetary gear 3 are supported in bearings at points "C" and "D", respectively, the rolling point (on the pitch circle) is point "G" which coincides with a characterizing point "G3" of said planetary gear 3. (A top view section can be prepared on the basis of Figure 1.) Using the customary positive sense, an anticlockwise rotation means a positive rotation, i.e. the rotation of arm 9 indicated by $\alpha_{arm}$ is positive. The ratio of the numbers of teeth is z4/z3 = 2. When the arm 9 is rotated, the angular displacement $\alpha_{G3}$ of said charac-terizing point of the planetary gear 3 satisfies the relation

$$\alpha_{G3} = \alpha_{arm} \cdot \left(1 - \frac{z4}{z3}\right) = \alpha_{arm} \cdot (-1) \quad.$$

Let us increase the planetary gear 3 in the plane of the Figure and indicate points "H" and "K" in given distances r along the direction of the arm 9 as well. Then let us apply a load on said planetary gear 3 by force $F_G$ in point "G". This force is transmitted to the fixed annulus 4 in the rolling point by the toothing, and thus a force $F_f$ acts on the so-called ground. Let us apply now a constant load in point "H", this is represented by force $F_H$. After reducing this to point "G", a force $F_G$ and a torque $M_{GH} = F_H \cdot r$ appear. The torque $M_{GH}$ can be replaced by a couple of forces $F_{GH}$, a component of which increases the force $F_f$ acting on the ground, while the other component thereof assists the motion of the arm 9 in point "D". Let us apply then said constant force in point "K", this is represented by force $F_K$. After reducing this to point "G", a force $F_G$ and a torque $M_{GK} = F_K \cdot r$ appear. The torque $M_{GK}$ can be replaced by a couple of forces $F_{GK}$, a component of which increases the force $F_f$ acting on the ground, while the other component thereof hinders the motion of the arm 9 in point "D". An advantageous retroaction of the force acting in point "H" on the input of the arm 9 can be utilized if during the angular displacement of said arm 9 it is ensured that the load force moves along a circle of radius (rb+r) in such a way that it acts on the arm 9 on the extension of said radius of the arm 9, in the intersection point of the two curves, in the repositioned point "H" in direction at right angle. Moreover, it has to be ensured as well that point "H" displaces and in a direction opposite to the circumferential force $F_H$. To satisfy these conditions, a slip-free geared geometrical construction is inappropriate. Now, let us complete the epicyclic train shown in Figure 6 with a further epicyclic train with the same parameters (i.e., m = 10, z2 = 20, z1 = 10, D2 = m·z2, D1 = m·z1) in such a way that planetary gear 1 becomes integrated with planetary gear 3 and the annulus 2 (i.e. the rotor part) can freely rotate about an axis crossing point "C". The thus implemented construction is shown in Figure 7. (A top view section can be prepared on the basis of Figure 1.)

In the construction of Figure 7 the arm 9 is rotated and the angular displacement $\alpha_{rotor}$ of the characterizing point "G2" of the annulus 2 is given by

$$\alpha_{rotor} = \alpha_{arm} \cdot \left(1 - \frac{z1 \cdot z4}{z2 \cdot z3}\right) = \alpha_{arm} \cdot \left(1 - \frac{D1 \cdot D4}{D2 \cdot D3}\right) = \alpha_{arm} \cdot 0 \quad .$$

Due to the constraint of slip-free rolling, relations z1/z2 = D1/D2 and z3/z4 = D3/D4 hold. Through the planetary gears 1 and 3 coupled together the load $F_{G2}$ acting on the annulus 2 acts on the annulus 4 fixed to the ground (and eventually on the ground), and hence it does not appear on the arm 9. To rotate the arm 9, only frictional losses have to be fed in, the amount of which increases if the force $F_{G2}$ increases too. The output power of the stationary force $F_{G2}$ is zero.

Let us modify the above geared construction to e.g. a type I construction illustrated in Figure 8a in such a manner that instead of toothing, magnet rims are used in matching with the pitch circle of the toothing, wherein the magnets are placed outside said pitch circle on the ring magnet rims 2, 4 and inside said pitch circle on the epicyclic magnet rims 1, 3. There is no mechanical contact between the magnet rims in the air gap minimum "G". A pole pair "p" always occupies the room for two teeth, thus p1 = z1/2 and p2 = z2/2 hold. In the drawings, the North pole surface is drawn by thick lines. In this exemplary construction comprising magnetic couplings, rotation of the arm 9 requires less energy as frictional losses due to toothing cancel and the increase in load does not affect the energy fed in. The customary positive directions of the angular displacement, angular velocity and torque, i.e. the quantities $+\alpha$, $+\omega$, $+M$, respectively, are also indicated in Figure 8a. The arm is rotated with an angle $\alpha_{arm}$ that increases evenly. Due to this, the epicyclic magnet rims 1, 3 swivel at an agular velocity $\omega_b$ in the direction indicated, however, the ring magnet rim 2 does not move, i.e. angular displacement of $\alpha_{rotor} = 0$ takes place. Said epicyclic magnet rims 1, 3 roll down on the ring magnet rims 2, 4 in magnetic coupling with the latter. Rolling is enabled by the magnetic coupling as by performing diameter correction so as to avoid mechanical contacts, the gap is also provided at the value of $0^+$ of the air gap minimum. The diameters of the epicyclic magnet rims 1, 3 and those of the ring magnet rims 2, 4 satisfy the conditions D1 = D3 and D2 = D4, respectively. However, in order that the magnet arrangement could be observed, the diameter D1 of the epicyclic magnet rim 1 is illustrated slightly smaller than D3, and the diameter D2 of the ring magnet rim 2 in magnetic coupling with said epicyclic magnet rim 1 is illustrated slightly larger than D4.

As it can be seen in Figure 8b, a load is applied on the ring magnet rim 2 at location "G2" through the force $F_{G2} = F_t$. Due to load, a torque angle known from the theory of synchronous machines develops, but the synchronous connection (the continuous pole pair coupling), that is also characteristic of a geared connection, remains up to the state of being overloaded. The force $F_{G2}$ acting on the surface of the ring magnet rim 2 at location "G2" is transmitted at point "Q1" in the form of $F_{21} = F_{G2}$ to the epicyclic magnet rim 1, then the force $F_{21} = F_{34}$ is transmitted at point "Q3" to the ring magnet rim 4 fixed to the ground and then it acts on the ground by the force $F_{34} = -F_f$ in the fixed point "G". The torque angles "β" are always given in electrical degrees, as is customary. Since the ring magnet rim 4 is fixed to the ground, the epicyclic magnet rims swivel by a torque angle $\beta_{43}$, and the magnetically coupled ring magnet rim 2 swivels by an additional torque angle $\beta_{12}$, i.e. altogether by a torque angle $\beta_{42}$. When analysing the underlying processes, torque angles $\beta_{43}$ and $\beta_{12}$ are approximated with 90° electrical degree. Thus, the angular displacement of said ring magnet rim 2 becomes $\beta_{43} + \beta_{12} = \beta_{42} = 180°$ (expressed in electrical degrees). In this case, similarly to the geared construction, no work is performed upon rotation of the arm 9, as the ring magnet rim 2 does not rotate.

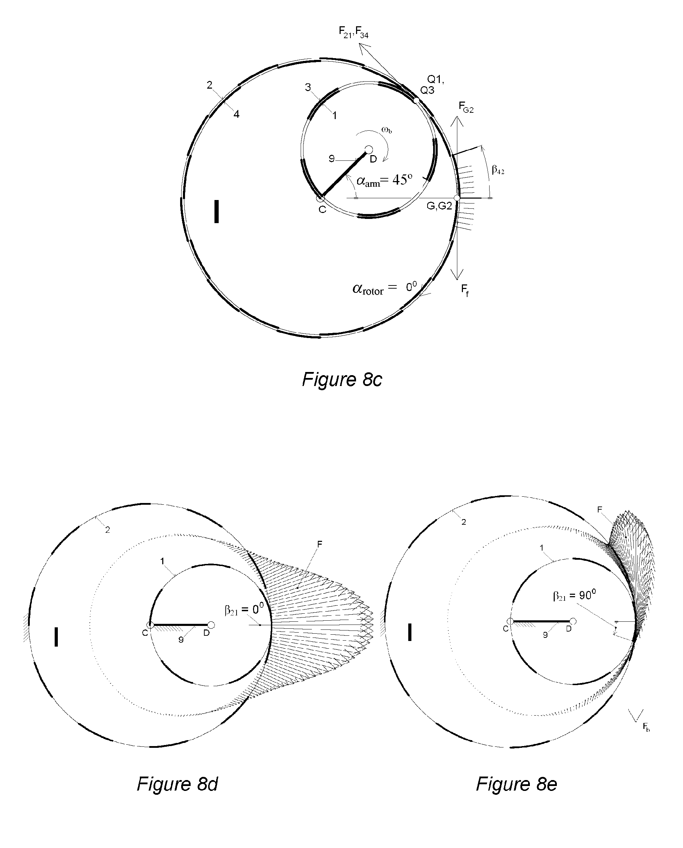

Figure 8c illustrates an angular displacement $\alpha_{arm} = 45°$ of the arm 9. In this position the load of force $F_{G2}$ is applied on the surface of the ring magnet rim 2 at the location "G2". The transmission of force to the epicyclic magnet rim 1 takes place at point "Q1" by the force $F_{21} = F_{G2}$, which is transmitted by the connected epicyclic magnet rim 3 at point "Q3" through the force $F_{34} = F_{21}$ to the ring magnet rim 4 fixed to the ground at point "G", which is transmitted to the ground as force $F_{34} = -F_f$.

Figure 8d shows the system of forces F per unit area along the air gap centre circle that develops as a consequence of the coupling between the epicyclic magnet rim 1 and the ring magnet rim 2 in the off-load state at torque angle $\beta_{21} = 0°$. Here, the arm 9 and the ring magnet rim 2 are fixed to the ground, but the angular displacement of the epicyclic magnet rim 1 is allowed.

Figure 8e illustrates the surface force F developing due to a force $F_b$ at torque angle $\beta_{21} = 90°$.

Figures 8f and 8g illustrate the connection system of forces of the epicyclic magnet rim 3 and the ring magnet rim 4 at torque angles $\beta_{43} = 0°$ and $\beta_{43} = 90°$, respectively. In this case, the arm 9 and the ring magnet rim 4 are fixed to the ground, but angular displacement of the epicyclic magnet rim 3 is allowed. Since the parameters of the epicyclic magnet rim 3 and ring magnet rim 4 are not varied, the surface force F corresponds to the one discussed above for the embodiments I to IIII and IIII*. In case of magnetic constructions, the constraint of engagement through mechanical contact is released and, hence, in the case of changing geometries it can be realized by a geometrical slip instead of the angular displacement and rolling down e.g. via maintaining the magnetic synchronous connection associated with the pole pair number. Due to said syncronous connection allowing the geometrical slip, it becomes possible to do work, wherein said work is performed during the motion by the magnetic fields that maintain a continuous coupling of the poles of the connected magnet rims.

To obtain a possible further exemplary embodiment of the apparatus 100, the pole pair number of the ring magnet rim 2 is decreased with a small integer number relative to the pole pair number of the ring magnet rim 4; that is, in particular, the exemplary numerical values used in the previous calculations are decreased from e.g. 10 to 9, as it is shown by the type II construction (see also Table 1). In practice, any modification of the number of the pole pairs arranged on the magnet rims relative to one another can be performed via appropriately modifying the circumferential widths of the magnet elements that forms the pole pairs affixed side-by-side continuously onto said magnet rims.

In this case, in Figure 9a a typical angular displacement $\alpha_{rotor}$ of the ring magnet rim 12 (and therefor of the rotor member 14) is given by

$$\alpha_{rotor} = \alpha_{arm} \cdot \left(1 - \frac{p1 \cdot p4}{p2 \cdot p3}\right) = \alpha_{arm} \cdot \left(1 - \frac{5 \cdot 10}{9 \cdot 5}\right) = 360° \cdot \left(-0.11\right) = -40° .$$

Neglecting customary losses and applying the law of conservation of energy to the magnetic system, the magnitude of the system of forces shown in Figure 6 alters. Retroaction of the load torque on the input is determined by the retroaction coefficient $\delta$, i.e.

$$\delta = \frac{rb}{r22} \cdot \left(1 - \frac{r12}{r34}\right), \text{ and now } \delta = 0 \text{ as } r12 = r34 .$$

Moreover, the ratio of the angular displacements is given by

$$a_{angular\ displacement} = \frac{\alpha_{arm}}{\alpha_{rotor}} = \frac{360°}{-40°} = -9 .$$

Here, if the angular displacement of the arm 9 is $\alpha_{arm} = 360°$ in the positive sense, said ring magnet rim 2 and thus the rotor member 14 perform a rotation of $\alpha_{rotor} = -40°$ in the negative sense.

Figure 9b shows an $\alpha_{arm} = 45°$ angular displacement of the arm 9; in this case, the angular displacement of the ring magnet rim 2 is -5°.

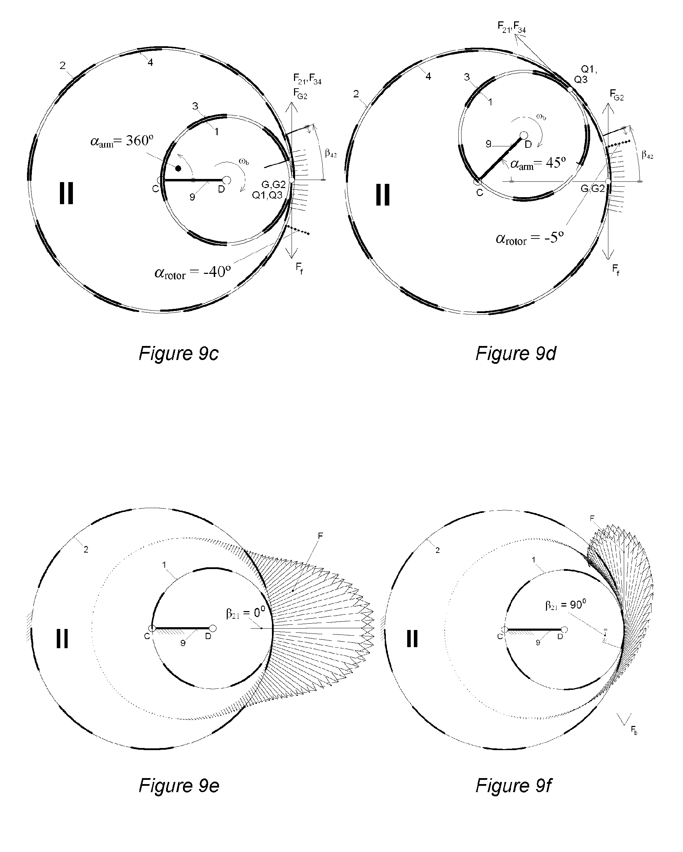

According to Figure 9c, a load of force $F_{G2}$ is applied on the surface of the ring magnet rim 2 at the location "G2". It is assumed that the torque angles are equal to 90°, thus said ring magnet rim 2 rotates by $\beta_{42} = 180°$ in the indicated way. The transmission of force to the epicyclic magnet rim 1 takes place at point "Q1" by the force $F_{21} = F_{G2}$, to the ring magnet rim 4 at point "Q3" by the force $F_{34} = F_{21}$, and as the latter is fixed to the ground at point "G", the load is transmitted to the ground at point "G" by the force $F_{34} = -F_f$. If the angular displacement of the arm 9 is 360°, said ring magnet rim 2 performs a rotation of $\alpha_{rotor} = -40°$. During a single complete turnaround of the arm 9, based on the exemplary values used previously, the value

$$M_{rotor} = -M_{load} = -114.56 \quad [\mathrm{Nm}], [\mathrm{VAs}]$$

is received (here, the units are given in brackets [ ]) for the load due to the counterforce developing upon the load by the force $F_{G2} = F_t$ acting on the ring magnet rim 2.

The output power of the work done at the rotational speed of e.g. $n_{rotor}$ = -1000 1/min can be expressed as

$$P_{rotor} = \frac{M_{rotor} \cdot \Delta\alpha_{rotor}}{\Delta t} = (-M_{load}) \cdot (-\omega_{rotor}) = 12000 \left[ \frac{\mathrm{Nm}}{\mathrm{s}} \right], [\mathrm{W}] \quad,$$

wherein $M_{rotor}$ represents the torque of the ring magnet rim 2, $M_{load}$ stands for the load torque, $P_{rotor}$ is the output power of the work performed, $\Delta t$ is the time period required by a single complete turnaround of said ring magnet rim 2, $\Delta\alpha_{rotor}$ is the angular displacement of the ring magnet rim 2 which is equal to $2\pi$ and $\omega_{rotor}$ represents the angular velocity of the ring magnet rim 2.

In Figure 9d an $\alpha_{arm}$ = 45° angular displacement of the arm 9 can be seen. The load acts on the ring magnet rim 2 in the point "G2" again. Again, the transmissions of force take place in the air gap minimum, in points "Q1" and "Q3" at a position with the angular displacement of 45° and in point "G", while the angular displacement of the ring magnet rim 2 is $\alpha_{rotor}$ = -5°.

Figure 9e shows the system of forces F per unit area for fixed arm 9 and fixed ring magnet rim 2 with allowing free rotation of the epicyclic magnet rim 1.

Similarly, in Figure 9f the system of forces F per unit area can be seen at torque angle $\beta_{21}$ = 90° due to a force $F_b$ acting on the epicyclic magnet rim 1.

To illustrate a possible further embodiment of the apparatus 100, let us modify the construction to the type III construction. To this end, pole pairs according to the type I construction are used and the diameter of the ring magnet rim 2 is varied so as to obtain the load acting in a location corresponding to the point "H" in accordance with Figure 6. Considering the previously used numerical values, this modification results in e.g. D2 = 150 mm (see also Table 1). That is, in this case the diameters of the ring magnet rims 2 and 4 will differ.

It can be seen in Figures 10a and 10b that at an angular displacement $\alpha_{arm}$ of the arm 9, the rotor member does not swivel, i.e. $\alpha_{rotor}$ = 0° holds. Here, the load torque retroaction coefficient of the system will be

$$\delta = \frac{rb}{r22} \cdot \left( 1 - \frac{r12}{r34} \right) = \frac{2 \cdot r}{3 \cdot r} \cdot \left( 1 - \frac{r}{2 \cdot r} \right) = \frac{1}{3} = 0.3333 \quad .$$

Figure 10c and 10d illustrate the system of forces F per unit area that develops without a load and with the application of a load, respectively. The load torque retroaction of this force on the arm 9, for which the torque angle is $\beta_{21}$ = 90°, is

$$M_{arm} = \delta \cdot M_{load} = \delta \cdot (-M_{rotor}) = 0.3333 \cdot 21.28 = 7.09 \quad [\mathrm{Nm}], [\mathrm{VAs}]$$

with the previously used numerical values.

In order that the present embodiment could be compared with further embodiments of the apparatus 100, the rotation of the arm 9 is allowed at a rotational speed of $n_{arm}$ = 9000 1/min upon the load torque. In such a case, the obtainable output power on said arm 9 is

$$P_{arm} = M_{arm} \cdot \frac{2 \cdot \pi \cdot n_{arm}}{60} = 6.68 \quad [\mathrm{kW}] \quad .$$

The system of forces characterizing this embodiment is illustrated in Figures 11c and 11 d. As a consequence of the type III construction, a dynamic rotating system of forces develops upon a static system of forces, due to which an automated four-quadrant drive (that is, a drive with a motor and a generator mode in both rotation directions) is accomplished by means of altering the magnitude and the direction of a static system of forces.

To illustrate a possible further embodiment, let us modify the construction to the type IIII construction, wherein pole pairs according to the type II construction are used and the diameter of the ring magnet rim 2 is kept at e.g. D2 = 150 mm (see also Table 1). That is, in this case the diameters of the ring magnet rims 2 and 4 will differ again.

In the type IIII construction illustrated in Figure 11a - like in the type 11 construction shown in Figure 9a - the angular displacement $\alpha_{rotor}$ of the rotor member 14 is

$$\alpha_{rotor} = \alpha_{arm} \cdot \left(1 - \frac{p1 \cdot p4}{p2 \cdot p3}\right) = \alpha_{arm} \cdot \left(1 - \frac{5 \cdot 10}{9 \cdot 5}\right) = 360° \cdot (-0.11) = -40° \quad .$$

In Figure 11b, $\alpha_{rotor}$= 45° · (-0.11) = -5°.

According to Figures 11c and 11d, a load of force $F_{G2}$ is applied on the surface of the ring magnet rim 2 at the location "G2", which is transmitted to the epicyclic magnet rim 1 at point "Q1" by the force $F_{21} = F_{G2}$, which is transmitted further to the ring magnet rim 4 at point "Q3" by the force $F_{34}$ and is transmitted then to the ground at point "G" by the force $F_{34} = -F_f$. The load torque retroaction coefficient of this system, similarly to the case of the type III construction, is

$$\delta = \frac{rb}{r22} \cdot \left(1 - \frac{r12}{r34}\right) = \frac{2 \cdot r}{3 \cdot r} \cdot \left(1 - \frac{r}{2 \cdot r}\right) = \frac{1}{3} = 0.3333 \quad .$$

The load torque of the system of forces F per unit area sketched in Figure 11e is zero.

The load torque of the system of forces F per unit area illustrated in Figure 11f is

$$M_{load} = -M_{rotor} = 14.29 \; [\text{VAs}], [\text{Nm}] .$$

In light of the above discussed features, the torque returned to the arm 9 from the load can be written as

$$M_{arm} = \delta \cdot M_{load} = 0.3333 \cdot 14.29 = 4.76 \; [\text{Nm}] \quad .$$

Therefor, the torque $M_{arm}$ developing due to the load will accelerate the system. If the ring magnet rim 2 is to be operated at a rotational speed of $n_{rotor}$ = -1000 1/min, the rotational speed of the arm 9 will be $n_{arm}$ = 9000 1/min. In this case the output power of the system on the surface of the ring magnet rim 2 (with the previously used numerical values) is

$$P_{rotor} = M_{rotor} \cdot \omega_{rotor} = 1.5 \; [\text{kW}] \quad .$$

Simultaneously, the ouput power on the shaft 10 of the arm 9 will be

$$P_{arm} = M_{arm} \cdot \omega_{arm} = 4.49 \; [\text{kW}] \quad .$$

According to Figure 11d, the arm swivels $\alpha_{arm}$ = 45°, while the angular displacement of the ring magnet rim 2 during the same time is rotor = -5°. A load exerted by the force $F_{G2}$ acts on the surface of the ring magnet rim 2 in the point "G2", which is transmitted to the epicyclic magnet rim 1 in point "Q1" by the force $F_{21} = F_{G2}$, then to the ring magnet rim 4 in point "Q3" by the force $F_{34}$, and then further to the ground in point "G" by the force $F_f = -F_{34}$. Due to the torque

$M_{arm}$, a force $F_D$ acts in the point "D".

Figures 11e and 11f illustrate the system of forces F per unit area that develops without a load and with the application of a load, respectively. In the latter case, the torque angle is $\beta_{21} = 90°$.

Figures 11g and 11h schematically show possible further embodiments of the apparatus according to the invention, from now on its type IIII and IIII*, respectively, constructions. For the sake of clarity, in Figures 11g and 11h the elements/parts that are (substantially) identical with elements/parts of the embodiment shown in Figure 1 are referred to with the same or similar reference numerals. Apparatuses 200, 300 shown in Figures 11g and 11h, respectively, are such embodiments of the basic mechanical construction outlined in Figures 11a to 11d that are completed with the coil yokes 7a, 7b and suitable for the accomplishment of the electrical power conversion techniques discussed previously. The feeding procedure of electrical power into a 50 Hz power supply grid is illustrated in Figures 13 and 14 to be also discussed later in detail. It should be here noted that in the case of a type IIII construction, the magnitude of the electical power fed into the power supply grid can be set via regulating the load applied on the shaft 10 of the apparatus 200. A yet further common feature of the apparatuses 200 and 300 is that the distances between the ring magnet rims 2, 4 and the axis of rotation of the epicyclic member 13 and/or the distances between the epicyclic magnet rims 1, 3 and the axis of rotation of said epicyclic member 13 differ from one another. Consequently, compared to the case wherein said distances measured from said axis of rotation are equal, in the embodiments at issue either the pole pair numbers used with the individual magnet rims or the dimensions of the individual pole pairs measured along the rim skirt circumference will be different from each other.

The apparatus 300 sketched in Figure 11h is obtained by rearranging the apparatus 100 shown in Figure 1 mechanically. In particular, through the rearrangement of the first portion "A" 21 and the second portion "B" 22 in such a way that said portions are mechanically joined in a transposed position. The burden of said mechanical joining is that the rotor members 14 (see Figure 1) of said portions "A" 21 and "B" 22 are arranged on the common shaft 10. As a consequence, said rotor members form a single integral rotor member 14' in this embodiment. Due to this joining, the hollow shaft 11 and the hollow shaft bearing 18 with its support become superfluous and hence are omitted. Furthermore, when joining, the hollow shaft bearings 19 and 20 are also arranged on the common shaft 10; in the apparatus 300, the single rotor member 14' can rotate about the shaft 10 supported in said hollow shaft bearings 19, 20. Moreover, in this embodiment the epicyclic members 13 can swivel about the bearings 15 embedded in the stator member 12. The present embodiment of the apparatus 300 is especially preferred when conversion into mechanical energy is to be performed. Naturally, said apparatus 300 can also be equipped - similarly to the apparatus 100 - with further elements required for converting the interaction energy of magnetic fields into electrical power, in particular, with the coil yokes 7a, 7b and the magnet rims 5, 6. Here, mechanical loading of the rotor member 14' takes place through the surfaces of the epicyclic magnet rims 3 of the epicyclic member 13. To decrease various types of losses, instead of mechanical bearings, preferably magnet bearings of large diameter are used in this case too.

Figures 12a and 12b illustrate the system of forces F per unit area in such a magnet bearing. In accordance with Figure 12a, the magnet rims are arranged concentrically with each other, and as far as dimensioning is concerned the choice of e.g. D2 = 200 mm and D1 = 196 mm is made. Here, the magnet thickness is e.g. 7 mm and the magnet length is 60 mm. The resultant force along direction x' is $F_{x'} = 0$ N. In the embodiment shown in Figure 12b, the maximum and minimum sizes of the air gap are 4 mm and $0^+$ mm, respectively; furthermore, e.g. D2 = 200 mm, D1 = 196 mm, the magnet thickness is 7 mm and the magnet length is 60 mm. The resultant force along direction x' is $F_{x'} = 1052$ N; this force pulls the surfaces together. If magnetic surfaces of the same magnetic polarity are applied, as is the case in magnetic bearings, according to the calculation, a maximal load of $F_{x'} = 1052$ N can be applied on this bearing without its mechanical damage (through physical contacts).

Figures 13a and 13b show the voltages generated by the windings on the coil yokes 7a and 7b (see Figure 1) as a function of time in normal and enlarged views, respectively. The voltage $U_{50Hz}$ is the result of the demodulation discussed. Here, $f_{7a} = 5300$ Hz, $f_{7b} = 5400$ Hz and their sum fluctuates at 100 Hz. By means of rectifying and properly switching said voltage, an 50 Hz voltage is produced. Integrating said 50 Hz voltage denoted by $U_{50Hz}$ [in units of Volt] with respect to time, the flux $\Phi_{50Hz}$ [in units of Volt.second] is obtained which is the main flux of the 50 Hz demodulating transformator (losses are neglected).

The phasor diagram of Figure 14a shows the typical complex voltages, fluxes and the current I fed into the power supply grid. Here, $U_H$ stands for the mains voltage and $U_{50Hz}$ is the 50 Hz voltage corrected to a generator; $U_z$ represents the voltage drop. The fluxes $\Phi_H$, $\Phi_{50Hz}$, $\Phi_z$ are the time integrals of the respective voltages (referred to with the same notations). To provide optimal performance, the angles $\varphi_{sz}$ and $\varphi_z$ are adjusted to zero by means of appropriately designed capacitors, however, this is not necessary. Electrical power $P_H$ represents the electrical power fed into the power supply grid. Here, Re and Im stand for the real and imaginary axes, respectively. The phasor diagram may show basic features of a resultant three-phase system too if the complex quatities indicated therein are field vectors.

Figure 14b illustrates the conversion of the interaction energy of magnets into electrical power in accordance with the inventive solution and a block diagram of a system for feeding the thus obtained electrical power into a 50 Hz power supply grid. The conversion of energy takes place by a wave generator WG that corresponds to any of the type I, II, III, IIII, IIII* magnetic constructions of the apparatus according to the invention, while the demodulation is performed by means of a rectifier EI (preferably e.g. a diode of suitable characteristics), an inverter VI (preferably e.g. an insulated gate bipolar transistor, IGBT) and a transformator TR connected to the output of said wave generator WG and coupled electrically with each other. Here, the transformator TR is connected directly to the mains MN. Driving on the input of said wave generator WG is performed by a synchronous machine SM energized (preferably by a three-phase way) by the mains MN, in particular, it rotates the shaft 10 of the wave generator WG at a desired synchronous rotational speed no. Setting of the angle $\varphi_{sz}$ (see Figure 14a) to a predetermined base angle $\varphi_{sz\_a}$ is performed by a regulator REG. Said regulator REG receives a synchronizing signal SYNC of the mains MN and the generator voltage $U_G$ on its input, timed swithing of swithing elements of the inverter VI is triggered by a switching signal SS generated on the output of the regulator REG. Setting of the angle $\varphi_{sz}$ can take place via the control signals CS1 and CS2 by means of an adjustment into the appropriate synchronous position, that can be equally achieved by regulating either the synchronous machine SM or the wave generator WG.

Figure 14c illustrates a yet further theoretical possibility for directly energizing electrical loads (e.g. radiators, high-frequency heaters, motors, etc.) by the generated electrical power.

Figure 15 shows in sectional view an embodiment of the apparatus 100 according to the invention illustrated schematically in Figure 1.

Theoretical findings related to the above-discussed construction types/embodiments of the symmetrical apparatus 100 obtained by joining said portions "A" and "B" as explained above are summarized in Table 1 below. The torque angle values given in brackets { } do not reach the value of 90° in the joined system. The calculations were performed for the rotational speed of $n_{rotor}$ = -1000 1/min. In order to ensure comparability, the value of the rotational speed $n_{arm}$ and the corresponding power values given in brackets ( ) are equal at the chosen rotational speed value if $n_{arm}$ = 9000 1/min holds. The + sign of the symbol (0+) within the row containing the air gap values refers to the fact that though magnetically coupled surfaces are in close proximity to each other, there are no mechanical contact between them.

*Table 1*

| Typical geometrical parameters | TYPE OF CONSTRUCTION (embodiment) | | | |
|---|---|---|---|---|
| | I | II | III | IIII |
| CONSTRUCTION DATA | | | | |
| p1 [piece] | 5 | 5 | 5 | 5 |
| p2 [piece] | 10 | 9 | 10 | 9 |
| p3 [piece] | 5 | 5 | 5 | 5 |
| p4 [piece] | 10 | 10 | 10 | 10 |
| D1 [mm] | 100 | 100 | 50 | 50 |
| D2 [mm] | 200 | 200 | 150 | 150 |
| D3 [mm] | 100 | 100 | 100 | 100 |
| D4 [mm] | 200 | 200 | 200 | 200 |
| air gap maximun [mm] | 100 | 100 | 100 | 100 |
| air gap minimum [mm] | 0+ | 0+ | 0+ | 0+ |
| magnet thickness [mm] | 7 | 7 | 7 | 7 |
| magnet length [mm] | 60 | 60 | 60 | 60 |
| $\beta_{21}$ [°] | 90 | {90} | 90 | 90 |
| $\beta_{43}$ [°] | 90 | 90 | {90} | {90} |
| RESULTS | | | | |
| $n_{rotor}$ [1/min] | 0 | -1000 | 0 | -1000 |
| $n_{arm}$ [1/min] | (9000) | 9000 | (9000) | 9000 |
| $\alpha_{arm}$ [°] | 360 | 360 | 360 | 360 |
| $\alpha_{rotor}$ [°] | 0 | -40 | 0 | -40 |

(continued)

| RESULTS | | | | |
|---|---|---|---|---|
| $\alpha_{arm}/\alpha_{rotor}$ | $\infty$ | -9 | $\infty$ | -9 |
| $M_{rotor}$ [Nm] | -114.56 | -114.56 | -21.28 | -14.29 |
| **$P_{rotor}$ [kW]** | **0** | **12** | **0** | **1,5** |
| $\delta$ | 0 | 0 | 0.33333333 | 0.33333333 |
| $M_{arm}$ [Nm] | 0 | 0 | 7.09 | 4.76 |
| **$P_{rotor}$ [kW]** | **0** | **0** | **(6.68)** | **4.49** |
| **$P_{rotor} + P_{arm}$ [kW]** | **0** | **12** | **(6.68)** | **5.99** |

In view of the above, the power $P_{sync}$ appearing due to the synchronous motion maintained by the interacting magnetic fields is explained in general with reference to the previously discussed Figures and preferably based on the second pair of magnet rims connection, with the aid of rims (annulus)/magnet rims 1 and 2 of Figures 7 and 8. It is noted that said power $P_{sync}$ is practically the work performed during a unit time by the magnetic field via perfoming regulation to energy minimum through energy rectification.

The arm 9 is omitted, and the first rim 1 is journaled at the position denoted by "D" (see Figure 7), the block of the bearing is affixed to the ground. Fixedness of the second rim (annulus) 2 is released and - similarly to the first rim 1 - it is journaled at the position denoted by "C", and the block of the bearing is affixed to the ground. Said bearings of the rims 1, 2 are formed/arranged so that the shafts supported in said bearings do not block relative rotations of said rims 1, 2 about their own respective shaft. Such an arrangement can be provided by e.g. longitudinally shifting said shafts relative to each other; other solutions obvious to a skilled person can be equally used. In this way, a traditional geared drive is obtained. If now the second rim 2 is provided with an outer toothing and the first rim 1 is arranged so as to have its axis of rotation outside the second rim 2, the operational relations remain unchanged - however, the magnitude of the connection energy will be different if said magnet rims are prepared with magnet pole pairs instead of mechanical toothing -, but in this way two external geared wheel couplings form. The powers ($P_1$ and $P_2$) of the input drive of an internal/external and/or an external/external geared wheel coupling described above can be calculated, along with neglecting customary losses, as it is known to a person skilled in the art as explained below.

As a consequence of the equality of speeds, the

$$v = r_1 \cdot \omega_1 = r_2 \cdot \omega_2 \quad \left[\frac{m}{s}\right] \quad \text{and} \quad \frac{r_2}{r_1} = \frac{\omega_1}{\omega_2} = \frac{D2}{D1} = \frac{z2}{z1}$$

relations hold. Since the magnitudes of the circumferential forces (a couple of forces) are equal, the relation

$$F = \frac{M_1}{r_1} = \frac{M_2}{r_2} = \frac{P_1}{r_1 \cdot \omega_1} = \frac{P_2}{r_2 \cdot \omega_2} \quad [N]$$

holds, and for the input drive with an input power of $P_1$, the relation

$$P_2 = P_1 \cdot \frac{r_2}{r_1} \cdot \frac{\omega_2}{\omega_1} = P_1 \cdot \frac{D2}{D1} \cdot \frac{z1}{z2} - P_1 + P_1 = P_1 \cdot \left(\frac{D2}{D1} \cdot \frac{z1}{z2} - 1\right) + P_1 = P_1 \cdot k_{sync} + P_1 = P_{sync} + P_1 \quad \left[\frac{Nm}{s}\right]$$

holds, wherein $P_1$ and $P_2$ represent the powers associated with the first and second rims 1, 2, respectively, (that is the input power and the output power), $k_{sync}$ is the so-called synchronous motion coefficient, and $P_{sync}$ stands for the power associated with the synchronous motion (in the case of magnet wheels, this latter corresponds to the work performed by the magnetic field on the magnet rims during unit time).

Since the relation

$$\frac{D2}{D1} = \frac{z2}{z1}$$

is always satisfied for geared drives, the equalities $k_{sync} = 0$, $P_{sync} = 0$ and $P_2 = P_1$ will hold.

If now the geared rims are replaced with magnet rims (see e.g. Figure 8, properly modified, however, in view of Figure 7) without altering the characterizing geometrical design (i.e. the diameters D1 and D2), the following geometrical ($z$), electrical ($p$) and angular velocity ($\omega$) relations hold

$$\frac{z2}{z1} = \frac{p2}{p1} = \frac{\omega_1}{\omega_2} \quad .$$

Thus, as the magnitudes of the circumferential forces (a couple of forces) are equal and the geometry is unaltered, the following relation will hold:

$$P_2 = P_1 \cdot \left( \frac{D2}{D1} \cdot \frac{p1}{p2} - 1 \right) + P_1 = P_1 \cdot k_{sync} + P_1 = P_{sync} + P_1 \quad \left[ \frac{Nm}{s} \right], \left[ \frac{VAs}{s} \right] \quad .$$

If

$$\frac{p2}{p1} \neq \frac{z2}{z1}$$

and the magnetic pole pair numbers p1 and p2 are chosen according to needs, as well as taking into account a realistic and loadable magnetic interaction, the following results can be obtained with the exemplary numerical values used previously in the case of type I, II, III, IIII constructions for the various embodiments:

type I

$$k_{sync} = \frac{200}{100} \cdot \frac{5}{10} - 1 = 0 \quad \text{and} \quad P_{sz} = 0 \quad \text{and} \quad P_2 = P_1 \left[ \frac{Nm}{s} \right];$$

type II

$$k_{sync} = \frac{200}{100} \cdot \frac{5}{9} - 1 = 0.11 \quad \text{and} \quad P_{sz} = 0.11 \cdot P_1 \quad \text{and} \quad P_2 = 1.11 \cdot P_1 \left[ \frac{Nm}{s} \right];$$

type III

$$k_{sync} = \frac{150}{50} \cdot \frac{5}{10} - 1 = 0.5 \quad \text{and} \quad P_{sz} = 0.5 \cdot P_1 \quad \text{and} \quad P_2 = 1.5 \cdot P_1 \left[ \frac{Nm}{s} \right];$$

type IIII

$$k_{sync} = \frac{150}{50} \cdot \frac{5}{9} - 1 = 0.67 \quad \text{and} \quad P_{sz} = 0.67 \cdot P_1 \quad \text{and} \quad P_2 = 1.67 \cdot P_1 \quad \left[\frac{Nm}{s}\right].$$

If *n* pieces of magnet rim units are connected in series, the power transfer of the obtained novel system, i.e. of the magnet wheel/rim drive is given, based on Figure 16, by

$$P_2 = P_1 \cdot \left(\frac{D2}{D1} \cdot \frac{p1}{p2}\right)^n = P_1 \cdot k_p^{\ n} \quad \left[\frac{Nm}{s}\right] \ ,$$

wherein P1 = $P_{in}$ is the input power of said magnet wheel/rim drive, P2 = $P_{out}$ is the output power of said magnet wheel/rim drive, $k_p$ represents the power gain by a single magnet rim unit that forms one individual stage, and *n* stands for the number of stages. In particular, in case of e.g. a 3-stage magnet wheel/rim drive (i.e. n = 3) formed in accordance with the type IIII construction the

$$P_{out} = P_{in} \cdot k_p^{\ n} = P_{in} \cdot \left(\frac{150}{50} \cdot \frac{5}{9}\right)^3 = P_{in} \cdot 4.63 \quad \left[\frac{Nm}{s}\right]$$

relation holds. That is, the system obtained is capable of power amplification, the extent of which depends on geometrical (*D*), electrical (*p*) and stage number (*n*) parameters.

Figure 17 shows an experimental model, on the basis of which it is possible to determine in a simple and highly illustrate way the power of the synchronous motion for a pair of magnet wheels. The advantageously chosen geometrical parameters (with the notations used previously), that is, the constraints applied, are the following: for the diameters of the magnet rims: D1 = D2 [m], for the diameters of the drums 1 D and 2D used: D1 * = D2* [m], as well as for the numbers of the pole pairs arranged in said magnet rims: p1 > p2 [piece], for the circumferential forces exerted by the coupled magnetic field at the air gap minimum without higher harmonics: F1 = F2 = F [N], and wherein the time taken for the displacment of masses *m* is T1 = T2 = T [s]. When mathematical explanation of the obtained results is provided, by neglecting customary losses, ideal conditions are assumed.

Under the starting conditions, the relation M1 = M2 [Nm] holds for the torques applied on the drums 1 D, 2D by the gravitational force G induced by each mass *m*; the displacements of the masses *m* are h1 and h2 [m], while the mean velocities during said displacements are v1 and v2 [m/s], respectively. For the characterizing quantities, the relations

$$1 = \frac{D1}{D2} < \frac{p1}{p2} = \frac{h2}{h1} = \frac{v2}{v1}$$

and

$$E2 > E1 \quad [Nm]$$

and

$$P2 > P1 \text{ and } P_{sync} = P2 - P1 \quad [Nm/s]$$

also hold, wherein E1 and E2 represent the works performed by a mass *m* connected to a respective drum 1 D, 2D, respectively, P1 and P2 represent the powers (i.e. the works performed during unit time) associated with a mass *m* connected to a respective drum 1D, 2D, respectively, and $P_{sync}$ stands for the power associated with the synchronous motion forming in the magnetic field.

As a start, the two masses $m$ are placed at the height AH. Then the mass $m$ on the drum 1 D is pushed from below so as to negotiate frictions and torque fluctuations arising in reality and to pass said mass $m$ along a path with length h1 substantially with a constant velocity v1 into a height BH1. As a consequence of this process, as the result of a synchronous motion appearing due to the magnetic connection, the mass $m$ on drum 2D (depending on the magnitude of the velocity v1) lowers along a path with length h2 substantially with a constant velocity v2 into a height BH2. Based on this experiment, the works performed by the masses $m$ are

$$E1 = G \cdot h1 \ [Nm] \ \text{ and } \ E2 = G \cdot h2 \ [Nm],$$

thus

$$\frac{E2}{E1} = \frac{h2}{h1} = \frac{p1}{p2} > 1,$$

which gives that

$$E2 > E1 \ [Nm].$$

Since the time T taken for the motion is the same for both directions of motion (rising, lowering), the relations

$$P2 = \frac{E2}{T} > \frac{E1}{T} = P1 \ \text{ and } \ \frac{P2}{P1} = \frac{E2}{E1} = \frac{p1}{p2} > 1,$$

as well as

$$P2 = P_{sync} + P1 \ [Nm/s]$$

hold.

Let us check this result with taking the motions of said masses $m$ into account. The mean velocity of each motion satisfies the respective relation

$$v2 = \frac{h2}{T} \ \left[\frac{m}{s}\right] \ \text{ and } \ v1 = \frac{h1}{T} \ \left[\frac{m}{s}\right],$$

which implies that due to the synchronous motion

$$P2 = G \cdot v2 \ [Nm/s] \ \text{ and } \ P1 = G \cdot v1 \ [Nm/s],$$

that is,

$$\frac{P2}{P1} = \frac{v2}{v1} = \frac{p1}{p2} > 1.$$

After transforming the this latter formula, the

$$P2 = P1 \cdot \frac{v2}{v1} - P1 + P1 = P1 \cdot \left(\frac{v2}{v1} - 1\right) + P1 = P_{sync} + P1 \quad \left[Nm/s\right]$$

relation is received.

From the calculation results of the above mock-up test, the same result was obtained for the magnitude of power P2 on the basis of both the change in the energies of position and the mean velocities of the motions. Hence, the power $P_{sync}$ associated with the synchronous motion appears naturally in this experiment. Said power $P_{sync}$ is provided by the regulation of the interacting magnetic fields to energy minimum, as a consequence of which the magnetic field is able to perform useful work characterized by the power $P_{sync}$.

Unlike known solutions, in the apparatus, also called wave generator, according to the invention provided as a novel electrical machine, both components - equally the magnetic energy $E_0$ and the active energy M - of the complex connection energy **E** perform work as the customary mechanical constraints due to mechanical contact cancel in this case. In the wave generator, the magnetic energy $E_0$ component of the connection energy field vector **E** characterizing the magnetic field of the interacting magnet rims induces the synchronous motion of the pole pairs in the magnet rims via regulating the coupled magnetic field to energy minimum. Through the regulation to energy minimum, the magnetic field ensures the appearance of the active energy M, which performs work, upon mechanical load in the wave generator. The location of energy minimum of the coupled magnetic field coincides with the instantaneous air gap minimum point which is determined by the angular position of the arm of the epicyclic member within the wave generator. It is the constructional parameters of the wave generator which can be chosen in advance that determine to what extent the active energy M, which performs work, appear on the shaft of the arm. This is given numerically by the torque retroaction coefficient δ.

Hence, some direct advantages of the method and the apparatus for utilizing the interaction energy of magnetic fields in accordance with the present invention are as follows:

- Unlike traditional electrical rotating machines, in case of the solutions according to the invention, no voltage is induced when mechanical energy is generated; furthermore, the inventive solutions accomplish energy rectification without coils and the mechanical chain always closes through the interacting magnetic fields. Thus, the mechanical degree of freedom of the system used always ensures that both components of the connection energy field vector **E** "work": the component M performs work, while the component $E_0$ performs a regulation of synchronous motion. A yet further advantage is that the present inventive solutions are capable of providing a four quadrant drive without coils.
- The solutions according to the invention are suitable for generating a large deal of working mechanical energy within a relatively small volume by making use of industrial magnets. This mechanical energy can be converted into electrical power in small volume and at high frequencies with energy densities that are higher than those that can be achieved in traditional electrical rotating machines; therefor the thus obtained electrical power can be fed even directly into the power supply grid.
- In case of an apparatus according to the invention, by properly choosing the geometrical parameters, even angular displacement/rotation of the arm can be induced via retroaction of the load, that is, the force retroacting on the arm due to the load - as external force - can result in the rotation of the arm.
- In the solutions according to the invention one or more magnetic drives are used instead of mechanical drives exposed to wear, and thus the overall lifetime of these apparatuses increase to a large extent.

## Claims

1. An apparatus (100, 200, 300) to utilize the energy of magnetic fields, the apparatus comprising

- a stator member (12);
- a shaft (10) having a geometrical axis that extends longitudinally, said shaft (10) being journalled in the stator member;
- a rotor member (14) being capable of swivelling around the shaft (10) relative to the stator member (12), said rotor member (14) can be loaded mechanically;
- an arm (9) formed on the shaft (10), rigidly co-rotating with said shaft (10);
- an epicyclic member (13) journalled in the arm (9), said epicyclic member (13) being capable of swivelling about an axis of rotation relative to both the stator member (12) and the rotor member (14), said axis of rotation being substantially parallel to the geometrical axis of the shaft (10); and
- a first pair of bearing members and a second pair of bearing members arranged so as to encompass the epicyclic member (13), said pairs of bearing members extending longitudinally of the shaft (10) without overlapping to one another in the longitudinal direction and consisting of an inner and an outer bearing member (3, 4; 1, 2), said inner and outer bearing members located opposite to one another in a direction that is substantially perpendicular to the axis of rotation, that is radially, of the epicyclic member (13), each bearing member (3, 4; 1, 2) being formed with a radially inner bearing surface and a radially outer bearing surface, wherein
magnet elements are affixed firmly to the outer bearing surfaces of the inner bearing members (3; 1) side-by-side continuously, magnetic axis of each magnet element being substantially perpendicular to the respective bearing surface and oriented in turn oppositely around said respective bearing surface, and
magnet elements are affixed firmly to the inner bearing surfaces of the outer bearing members (4; 2) side-by-side continuously, magnetic axis of each magnet element being substantially perpendicular to the respective bearing surface and oriented in turn oppositely around said respective bearing surface, wherein
the outer bearing member (4) of the first pair of bearing members is firmly attached to the stator member (12), the inner bearing member (3) of the first pair of bearing members and the inner bearing member (1) of the second pair of bearing members are firmly attached to the epicyclic member (13), and
the outer bearing member (2) of the second pair of bearing members is firmly attached to the rotor member (14), and wherein
when the apparatus (100, 200, 300) has been assembled, the respective inner and outer bearing members of the pairs of bearing members carrying said magnet elements are arranged in a contact-free position with maintaining magnetic coupling with one another through an air gap, said air gap between the magnet elements arranged on the opposite bearing surfaces being kept minimal all along during synchronous motion of said inner and outer bearing members relative to each other.

2. The apparatus according to Claim 1, wherein a distance between the inner bearing member (3) of the first pair of bearing members and the axis of rotation of the epicyclic member (13) and a distance between the inner bearing member (1) of the second pair of bearing members and the axis of rotation of the epicyclic member (13) are different.

3. The apparatus according to Claim 1 or 2, wherein the number of pairs of neighbouring magnet elements with oppositely oriented magnetic axis, that is of pole pairs, arranged on the outer and the inner bearing members (4, 3) of the first pair of bearing members are chosen arbitrarily.

4. The apparatus according to any of Claims 1 to 3, wherein the number of pairs of neighbouring magnet elements with oppositely oriented magnetic axis, that is of the pole pairs, arranged on the outer and the inner bearing members (2, 1) of the second pair of bearing members are chosen arbitrarily.

5. The apparatus according to any of Claims 1 to 4, wherein the epicyclic member (13) is provided in the form of least two separate epicyclic units, each epicyclic unit being journalled in the arm (9) separately, and wherein axes of rotation of said epicyclic units are located around the shaft (10), in a plane section perpendicular to the shaft (10), at equal angular distances from one another, and wherein the inner bearing member (3) of the first pair of bearing members and the inner bearing member (1) of the second pair of bearing members are equally provided in the form of inner bearing members located at equal angular distances from one another, the number of said inner bearing members being equal to the number of said epicyclic units, wherein each of said inner bearing members is firmly attached to a respective epicyclic unit with maintaining the air gap with a respective outer bearing member (4; 2) of the first and the second pairs of bearing members, respectively.

6. The apparatus according to any of Claims 1 to 5, wherein magnetic bearings with low inner friction are used as bearings (15, 16, 17, 18, 19, 20).

7. The apparatus according to any of Claims 1 to 6, wherein
a third pair of bearing members is arranged relative to the geometrical axis of the shaft (10) radially farther than the first and second pairs of bearing members, said third pair of bearing members consisting of a radially inner and a radially outer bearing member (5, 6) arranged concentrically with each other, each bearing member (5, 6) comprising a radially inner bearing surface and a radially outer bearing surface, wherein magnet elements are affixed firmly to the outer bearing surface of the inner bearing member (5) and to the inner bearing surface of the outer bearing member (6) side-by-side continuously, magnetic axis of each magnet element being substantially perpendicular to the respective bearing surface and oriented in turn oppositely around said respective bearing surface, and wherein said inner bearing member (5) and said outer bearing member (6) are firmly attached to the rotor member (14) spaced apart from one another, and

a coil holder member (8a) is arranged between the inner and the outer bearing members (5, 6), provided with magnet elements, of the third pair of bearing members, the coil holder member (8a) being firmly attached to the stator member (12), wherein at least one winding is formed in/on a portion of the coild holder member which is located between the inner and the outer bearing members (5, 6), said winding being made of electrically conducting material and provided with electrical contacts (7a-1, 7a-2).

8. The apparatus according to Claim 7, wherein the at least one winding is formed by first conducting elements arranged on opposite sides of the coil holder member (8a) and extending in parallel with each other in the longitudinal direction and second conducting elements connecting on the same side said first conducting elements in adjacent pairs in turn with opposite ends of said first conducting elements in series.

9. The apparatus according to Claim 8, wherein the number of the first conducting elements is at least one per magnet elements arranged on each of the bearing elements (5, 6) of the third pair of bearing elements.

10. The apparatus according to any of Claims 1 to 9, wherein said magnet elements are provided by industrial magnets, preferably neodymium magnets, exciting strong magnetic field.

11. The apparatus according to any of Claims 1 to 10, wherein the angular displacement ($\alpha_{rotor}$) of the rotor member (14) around the shaft (10) and the angular displacement ($\alpha_{arm}$) of the arm (9) around the shaft (10) satisfy the relation

$$\alpha_{rotor} = \alpha_{arm} \cdot \left( 1 - \frac{p1 \cdot p4}{p2 \cdot p3} \right) \quad,$$

wherein $p1$ represents the number of pole pairs arranged on the inner bearing member (1) of the second pair of bearing members, $p2$ represents the number of pole pairs arranged on the outer bearing member (2) of the second pair of bearing members, $p3$ represents the number of pole pairs arranged on the inner bearing member (3) of the first pair of bearing members and $p4$ represents the number of pole pairs arranged on the outer bearing member (4) of the first pair of bearing members.

12. The apparatus according to any of Claims 1 to 10, wherein a load ($M_{load}$) applied on the rotor member (14) produces a torque ($M_{arm}$) on the arm (9), the magnitude of which is expressed by

$$M_{arm} = \delta \cdot M_{load} \quad,$$

wherein a retroaction coefficient $\delta$ is defined by the geometrical parameters of the apparatus through the relation

$$\delta = \frac{rb}{r22} \cdot \left( 1 - \frac{r12}{r34} \right) \quad,$$

wherein $rb$ represents a distance measured between the axis of rotation of the epicyclic member (13) and the geometrical axis of the shaft (10), $r12$ represents a distance measured at the air gap minimum between the inner bearing surface of the outer bearing member (2) and the outer bearing surface of the inner bearing member (1) of the second pair of bearing members and the axis of rotation of the epicyclic member (13), $r22$ represents a distance measured at the air gap minimum between the inner bearing surface of the outer bearing member (2) and the outer bearing surface of the inner bearing member (1) of the second pair of bearing members and the geometrical axis of the shaft (10), and $r34$ represents a distance measured at the air gap minimum between the inner bearing surface of the outer bearing member (4) and the outer bearing surface of the inner bearing member (3) of the first pair of bearing members and the axis of rotation of the epicyclic member (13).

13. A method for utilizing the energy of magnetic fields, comprising the steps of

providing first and second pairs of bearing members extending along a longitudinal shaft (10) without overlapping to one another in the longitudinal direction, wherein each pair of bearing members is formed with an inner and an outer bearing member (3, 4; 1, 2), said inner and outer bearing members are located opposite to one another in a direction that is substantially perpendicular to the shaft (10), that is radially, and each bearing member (3, 4; 1, 2) of the pairs of bearing members are formed as an annular element with a radially inner bearing surface and a radially outer bearing surface;

affixing firmly magnet elements to the outer bearing surfaces of the inner bearing members (3; 1) and to the inner bearing surfaces of the outer bearing members (4; 2) continuously side-by-side, magnetic axis of each magnet element being substantially perpendicular to the respective bearing surface and oriented in turn oppositely around said respective bearing surface;

combining the outer bearing member (4) of the first pair of bearing members with a stator member (12), combining the inner bearing member (3) of the first pair of bearing members and the inner bearing member (1) of the second pair of bearing members with an epicyclic member (13), and combining the outer bearing member (2) of the second pair of bearing members with a rotor member (14) so as to bring said inner and outer bearing members (3, 4; 1, 2) into magnetic coupling which is free of mechanical contacts and develops at a position defining an air gap minimum, wherein the rotor member (14) is coupled to the stator member (12) so as to be capable of swivelling about the shaft (10) relative to the stator member (12), and the epicyclic member (13) is coupled to the stator member (12) so as to be capable of performing a planetary motion around the shaft (10) relative to the stator member (12);

inducing a synchronous motion of the epicyclic member (13) by means of said magnetic coupling via swivelling the arm (9), wherein during said synchronous motion the air gap minimum point between the respective inner and outer bearing members (3, 4; 1, 2) travels around, continuously moving, on the outer bearing surface of the inner bearing members (3; 1); and

performing mechanical work or producing other kind of energy by a load that acts on the rotor member (14) due the magnetic coupling through the epicyclic member (13) performing synchronous motion and induces angular displacement of said rotor member (14).

**14.** The method according to Claim 13, further comprising

arranging also a third pair of bearing members relative to the geometrical axis of the shaft (10) radially farther than the first and second pairs of bearing members, said third pair of bearing members is formed with a radially inner and a radially outer bearing member (5, 6) arranged concentrically with each other, each bearing member (5, 6) comprises a radially inner bearing surface and a radially outer bearing surface;

affixing firmly magnet elements to the outer bearing surface of the inner bearing member (5) and to the inner bearing surface of the outer bearing member (6) side-by-side continuously, magnetic axis of each magnet element being substantially perpendicular to the respective bearing surface and oriented in turn oppositely around said respective bearing surface;

attaching firmly said inner bearing member (5) and said outer bearing member (6) to the rotor member (14) spaced apart from one another;

arranging at least one winding between the inner and the outer bearing members (5, 6), provided with magnet elements, of the third pair of bearing members, said at least one winding being firmly attached to the stator member (12), made of electrically conducting material and provided with electrical contacts;

offering high-frequency electrical voltage induced upon angular displacement of said rotor member (14) within the at least one winding by the rotating magnetic field of the magnet elements of said third pair of bearing members through the contacts (7a-1, 7a-2) to further use.

**15.** The method according to Claim 13 or 14, comprising supplying electrical power as the further use, wherein the obtained high-frequency electrical power, optionally after subjecting to rectification, is applied on electrical consumers or after subjecting to demodulation is fed into the power supply grid.

**16.** A magnet wheel drive for the apparatus according to any of Claims 1 to 12 or to be used in the method according to any of Claims 13 to 15, *characterized in* that it comprises

- a first shaft and a first annular bearing member attached to said first shaft concentrically, said bearing member comprising in a direction that is substantially perpendicular to said shaft, i.e. radially, an inner bearing surface and an outer bearing surface, wherein to the outer bearing surface magnet elements are affixed firmly side-by-side continuously;

- a second shaft and a second annular bearing member attached to said second shaft concentrically, said bearing member comprising in a direction that is substantially perpendicular to said shaft, i.e. radially, an inner bearing surface and an outer bearing surface, and the second shaft is substantially parallel with the first shaft;

wherein

the first bearing member is located inside of the inner bearing surface of the second bearing member, and to the inner bearing surface of the second bearing member magnet elements are affixed firmly side-by-side continuously, or

the first bearing member is located outside of the outer bearing surface of the second bearing member, and to the outer bearing surface of the second bearing member magnet elements are affixed firmly side-by-side continuously, wherein magnetic axis of each magnet element that is affixed to said bearing surfaces is substantially perpendicular to the respective bearing surface and oriented in turn oppositely around said respective bearing surface, and

the first bearing member and the second bearing member are in contact-free magnetic coupling with one another by means of their magnet elements through an air gap in such a way that an angular displacement of one of said bearing members due to a load thereon induces synchronous motion of the other bearing member around its shaft with the air gap kept at a minimum value by means of said magnetic coupling.

*Figure 1*

Figure 2

Figure 3

*Figure 4*

*Figure 5*

Figure 6

Figure 7

Figure 8a

Figure 8b

Figure 8c

Figure 8d

Figure 8e

Figure 8f

Figure 8g

Figure 9a

Figure 9b

Figure 9c

Figure 9d

Figure 9e

Figure 9f

Figure 10a

Figure 10b

Figure 10c

Figure 10d

Figure 11a

Figure 11b

Figure 11c

Figure 11d

Figure 11e

Figure 11f

Figure 11g

Figure 11h

Figure 12a

Figure 12b

Figure 13a

Figure 13b

$$P_H = -U_H \cdot I_{be} \ [W]$$

*Figure 14a*

*Figure 14b*

*Figure 14c*

Figure 15

*Figure 16*

**Constraints**

D1 = D2 [m]
D1* = D2* [m]
p1 > p2 [piece]
F1 = F2 = F [N]
T1 = T2 = T [s]

**Results** (ideal conditions)

$$1 = \frac{D1}{D2} < \frac{p1}{p2} = \frac{h2}{h1} = \frac{v2}{v1}$$

$$\underline{E2 > E1 \ \& \ P2 > P1}$$

$$\underline{P_{sync} = P2 - P1}$$

*Figure 17*

Europäisches
Patentamt

European
Patent Office

Office européen
des brevets

# DECLARATION

which under Rule 63 of the European Patent Convention
shall be considered, for the purposes of subsequent
proceedings, as the European search report

**Application Number**

EP 11 46 2006

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>H02K53/00 |

A meaningful search is not possible
because the application does not fulfill
the requirements of Article 83 EPC in such
an extend that no meaningful search is
possible. The reasons therefore are as as
follows.
The objective of the alleged invention is
to provide an apparatus and a method that
provide mechanical and/or electrical
energy from energy of the interaction of
magnetic fields (see page 1, lines 1-3).
More specifically it is the objective of
the alleged invention to generate
electrical power (see p. 1, l. 9-11).
According to fig. 14b and 14c of the
application the claimed apparatus is
driven externally by a synchronous machine
(figure 14b) or a drive (figure 14c). In
both cases the output power (P2) is
greater than the input power (P1). This is
stated in the  second equation found at
page 32, wherein ksync is a number above 0
(see page 32, examples at the bottom of
the page or page 33, first equation). The
last sentence of the first paragraph on
page 33 is even more explicit: "That is,
the system obtained is capable of power
amplification..."
Taking the overall energy balance of the
embodiments of the invention, it appears
therefore that the energy delivered on the
output side is higher than the energy
provided on the input side and the
application does not disclose any other
energy source.
The disclosed embodiments clearly
contravene the generally accepted law of
energy conservation (first law of
thermodynamics). Thus the application as
-/--

| Place of search | Date | Examiner |
|---|---|---|
| Berlin | 13 December 2011 | Roy, Christophe |

EPO FORM 1504 (P04F37)

Europäisches
Patentamt

European
Patent Office

Office européen
des brevets

**DECLARATION**

which under Rule 63 of the European Patent Convention
shall be considered, for the purposes of subsequent
proceedings, as the European search report

Application Number

EP 11 46 2006

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

filled does not disclose any working embodiment that could allow a skilled person to carry out the invention according to the objective as set in the application.
Throughout the description the applicant states that some energy is generated through the interaction of magnetic fields (see e.g. p. 1, l. 1-3; p. 1, l. 15-19; p. 3, l. 16-20; p. 4, l. 15-20; p. 36, l. 4-8). Whereas it is not disputed that magnetic fields may be involved in  energy conversion from one form to an other, magnetic fields as such do not generate any energy, they can solely interact to convert energy from one form at an input side to an other form at the output side. It is concluded from the above reasoning that the application does not disclose the invention in sufficiently clear and complete manner for it to be carried out by a skilled man. The application does not fulfill the requirements of Article 83 EPC in such a way that no meaningful search is possible.

The applicant's attention is drawn to the fact that a search may be carried out during examination following a declaration of no search under Rule 63 EPC, should the problems which led to the declaration being issued be overcome (see EPC Guideline C-VI, 8.2).

| Place of search | Date | Examiner |
|---|---|---|
| Berlin | 13 December 2011 | Roy, Christophe |

EPO FORM 1504 (P04F37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- HU 218339 B
- US 4897592 A
- EP 0168712 A1
- HU 226570 B1

**Non-patent literature cited in the description**

- **GÁBOR FEKETE.** A New Energy Controlled Current Source Inverter Fed Induction Motor Drive. *Conference Proceedings of the 9th International Conference and Exhibition on Power Electronics and Motion Control,* 2000, vol. 7, 130-134